# EUROPEAN PATENT SPECIFICATION

(11) **EP 3 848 200 B1**
(45) Date of publication and mention of the grant of the patent: **27.08.2025**
(21) Application number: 19857964.1
(22) Date of filing: 03.09.2019
(51) Int. Cl.: B32B 27/32, B29C 48/21, B32B 27/00, B65D 65/40, B29L 7/00, B29L 9/00

(54) **READILY TEARABLE CO-EXTRUDED MULTILAYER BARRIER FILM AND PACKAGING MATERIAL**
LEICHT AUFREISSBARE KOEXTRUDIERTE MEHRSCHICHTIGE SPERRFOLIE UND VERPACKUNGSMATERIAL
FILM BARRIÈRE MULTICOUCHE CO-EXTRUDÉ FACILEMENT DÉCHIRABLE ET MATÉRIAU D'EMBALLAGE

(30) Priority: 03.09.2018 JP 2018164863
(43) Date of publication of application: 14.07.2021
(73) Proprietor: Japan Polyethylene Corporation, Tokyo 100-8251 (JP)
(72) Inventor: ITO, Kota, Kawasaki-shi, Kanagawa 210-8548 (JP)
(74) Representative: Hoffmann Eitle
(86) International application number: PCT/JP2019/034592
(87) International publication number: WO 2020/050258

(56) References cited:
- EP-A1- 1 295 908
- WO-A1-96/01184
- JP-A- 2012 187 809
- JP-A- 2013 133 337
- JP-A- 2016 219 444
- JP-A- 2017 197 625
- JP-A- 2018 069 734
- JP-A- 2018 104 583
- JP-A- 2018 115 320
- JP-A- H07 166 010
- US-A- 6 165 573
- US-A1- 2002 156 195
- US-A1- 2004 067 382
- US-A1- 2009 318 597
- US-A1- 2014 370 278
- STACHURSKI Z H ET AL: "TEARING RESISTANCE OF MULTI LAYER PLASTIC FILMS", INTERNATIONAL JOURNAL OF FRACTURE, SPRINGER NETHERLANDS, DORDRECHT, vol. 68, no. 2, 1 January 2004 (2004-01-01), pages 141 - 150, XP008075169, ISSN: 0376-9429

## Description

### TECHNICAL FIELD

The present invention relates to a readily tearable co-extruded multilayer barrier film and particularly relates to a readily tearable co-extruded multilayer barrier film having excellent gas barrier properties, excellent readily tearable properties especially in a transverse direction (TD) relative to a machine direction (MD) and preferably excellent readily linearly tearable properties in TD, and excellent low curling properties, and a packaging material.

### BACKGROUND ART

In recent years, while safety of food attracts attention, functionality such as gas barrier properties and water vapor barrier properties is demanded to be imparted to packaging bags to be used for food products, such as food and drink and seasoning. Furthermore, in addition to excellent design and package design, achievement of barrier free, such as easy opening, is further required to meet demand for dwindling birthrate and aging population.

As a layered body for packaging used in a food packaging bag, from the perspectives of imparting characteristics that are required for a packaging bag, such as barrier properties, heat-sealing properties, and pinhole resistance, a layered body obtained by laminating a polyolefin-based resin layer, formed from a polyethylene-based resin such as a high-pressure low-density polyethylene (LDPE) or an ethylene-vinyl acetate copolymer (EVA) or a polypropylene-based resin, on a substrate layer formed from polyamide, polyester, or the like positioned on an outer face of the packaging bag has been used.

The methods of providing easy opening of a packaging bag formed from the layered body described above are broadly classified into methods of imparting readily tearable properties to a substrate layer and methods of imparting readily tearable properties to a polyolefin-based resin layer which is laminated on a substrate layer.

As the former, an example is a method in which a readily cut polyamide film or a readily cut polyester film, to which stretching processing has been applied, is used as a substrate layer (Patent Documents 1, 2, and 3). However, such a readily cut substrate is not only expensive but also easily causes non-uniformity in stretching in a width direction of a film. Linearity at the time of tearing tends to change depending on the position to be used as the substrate and, when formed into a bag form and torn, a film on the front side and a film on the back side of the bag tend to be out of alignment (parting), and the unstable quality is problematic.

Furthermore, as the latter, for example, it has been attempted to impart readily linearly tearable properties in an opening direction of a packaging bag by laminating a readily cut sealant film formed from a polyethylene-based resin and a cyclic polyolefin-based resin on one side of a substrate (Patent Document 4). However, in such invention, in the case where a general-purpose polyester film and the readily cut sealant film are laminated, sufficient readily linearly tearable properties are not achieved.

Furthermore, in both of the methods, to laminate a substrate and a polyolefin-based resin layer, laminate processing using an adhesive agent and/or an anchor coat agent is necessary. The adhesive agent and/or the anchor coat agent used during the laminate processing is mostly used in a condition where the adhesive agent and/or the anchor coat agent is diluted with an organic solvent such as ethyl acetate; however, the organic solvent such as ethyl acetate is not only dangerous due to its high inflammability but also is harmful to human body and has a high environmental load.

For the problems described above, it has been attempted to impart readily tearable properties to a polyamide-based multilayer film by using a polyamide-based resin composition obtained by blending an ionomer resin and a high density polyethylene in an aliphatic polyamide resin for a substrate layer and performing film formation processing by co-extrusion method (Patent Document 5). Furthermore, in Patent Document 6, it has been attempted to impart readily tearable properties to a barrier resin layer by using an adhesive resin composition containing at least a modified polyolefin-based resin and a cyclic polyolefin-based resin. Furthermore, Patent Documents 7, 8, and 9 each disclose a layered body having an adhesive layer formed from a modified polyolefin-based resin on a substrate layer formed from polyamide or the like and having a mixed resin layer formed from a cyclic olefin-based resin and a polyethylene-based resin thereon.
Patent Document 10 describes a multi-layer laminate as well as a packaging material and a film using the multi-layer laminate. The multi-layer laminate consists essentially of (A) a layer formed from an ethylene/cycloolefin random copolymer which is a copolymer of ethylene and a cycloolefin represented by a specific formula (e.g., tetracyclododecene), or a layer formed from a cycloolefin resin which is a graft modified product of the ethylene/cycloolefin random copolymer, or a layer formed from a cycloolefin resin composition comprising the cycloolefin resin and a polyolefin; and (B) a barrier layer consisting essentially of ethylene/vinyl alcohol copolymer, polyvinylidene chloride, or polyacrylonitrile, with the barrier layer having an oxygen permeability, as measured at 23° C and RH of 0%, of not more than 10 cc(STP) mm/m ² 24 hr.atm; said multi-layer laminate having a moisture permeability of not more than 0.2 g.mm/m ² 24 hr atm and an oxygen permeability of not more than 5 cc(STP) mm/m² 24 hr atm.
Patent Document 11 describes a coextruded multilayer film structure comprising, in that order, at least one puncture resistant layer comprising at least one cyclic olefin copolymer and at least one ionomer or polyolefin; at least one tie layer; at least one barrier layer consisting essentially of a layer of ethylene vinyl alcohol copolymer (EVOH) between at least two layers each independently comprising a polyamide, a cyclic olefin copolymer or a blend of cyclic olefin copolymer and polyethylene or polypropylene or ionomer; and at least one sealant layer; wherein the film is either monoaxially oriented or biaxially oriented.
Patent Document 12 describes a controllable tear film material comprising a material which is a mixture of at least two polymers that form at least two phases in the melt and in the film extruded thereof, said mixture comprising at least 70 to 90 % of the total weight of a first polymer selected from the group consisting of LDPE, VLDPE, LLDPE, MDPE, HDPE, ionomers and EVA, EBA and EMA, and 1 0 to 30% of a second incompatible cyclic organic copolymer selected from a group comprising norbornene and having glass transition temperatures between 60°C and 160°C where the tear propagation resistance, in the machine and the perpendicular transverse direction, in the said film material is reduced by at least 80%, and the elongation at break by at least 60% compared to the pure monophasic polymer.

### PRIOR ART DOCUMENTS

### Patent Documents

Patent Document 1: Japanese Patent Application Kokai Publication No. H11-48424 (unexamined, published Japanese patent application)
Patent Document 2: Japanese Patent Application Kokai Publication No. H11-309825 (unexamined, published Japanese patent application)
Patent Document 3: (Granted/Registered) Japanese Patent No. 3642616
Patent Document 4: Japanese Patent Application Kokai Publication No. 2014-159302 (unexamined, published Japanese patent application)
Patent Document 5: Japanese Patent Application Kokai Publication No. 2005-41093 (unexamined, published Japanese patent application)
Patent Document 6: Japanese Patent Application Kokai Publication No. 2018-104583 (unexamined, published Japanese patent application)
Patent Document 7: Japanese Patent Application Kokai Publication No. 2017-52250 (unexamined, published Japanese patent application)
Patent Document 8: Japanese Patent Application Kokai Publication No. 2018-69734 (unexamined, published Japanese patent application)
Patent Document 9: Japanese Patent Application Kokai Publication No. 2018-69735 (unexamined, published Japanese patent application)
Patent Document 10: US 6,165,573 A
Patent Document 11: US 2014/370278 A1
Patent Document 12: EP 1 295 908 A1

### SUMMARY OF THE INVENTION

### Problems to be Solved by the Invention

The technology described in Patent Document 5 achieves excellent linearity during tearing but is not suitable for an easy opening packaging material due to its high tearing load. Furthermore, because an ionomer resin and a high density polyethylene are blended into a substrate layer formed from an aliphatic polyamide resin, gas barrier properties of the substrate layer formed from the aliphatic polyamide resin may be deteriorated. The structure specifically disclosed in Patent Document 6 (structure in which an adhesive resin composition is laminated only on one side by using a cyclic polyolefin-based resin having a low glass transition temperature) practically exhibited insufficient readily tearable properties as a layered body of a polyamide-based resin and a polar resin such as an ethylene-vinyl alcohol copolymer and insufficient linearity at the time of tearing which is important for practical use. Furthermore, also Patent Documents 7, 8, and 9 practically did not exhibit sufficient readily tearable properties and readily linearly tearable properties especially in TD direction.

Taking problems of conventional technology described above into consideration, an object of the present invention is to provide a readily tearable coextruded barrier film having excellent gas barrier properties and being solvent-free as well as having excellent readily tearable properties in a specific direction, and more preferably also having excellent linearly tearable properties and low curling properties, and a packaging material.

### Means for Solving the Problems

To solve the problems described above, as a result of diligent research, the inventor of the present invention unexpectedly found that a multilayer film that can solve the problems described above can be obtained by producing a co-extruded multilayer film in a specific structure condition and thus achieved the present invention.

That is, a first aspect of the present invention provides a readily tearable coextruded multilayer barrier film being a multilayer film formed from at least three layers, the readily tearable co-extruded multilayer barrier film comprising a layered body having a barrier layer (I) containing a polar resin (a) as a main component, and an adhesive layer (II) and an adhesive layer (III) laminated on both sides adjacent to the barrier layer (I), the adhesive layer (II) and the adhesive layer (III) each at least containing a modified polyolefin-based resin (b) modified with an unsaturated carboxylic acid or a derivative thereof, and a cyclic olefin-based resin (c).

Furthermore, a second aspect of the present invention provides the readily tearable co-extruded multilayer barrier film according to the first aspect of the present invention, in which a content of the cyclic olefin-based resin (c) in each of the adhesive layer (II) and the adhesive layer (III) is from 10 wt.% to 80 wt.%.

Furthermore, a third aspect of the present invention provides the readily tearable co-extruded multilayer barrier film according to the first or second aspect of the present invention, in which a glass transition temperature (Tg) of the cyclic olefin-based resin (c) is from 100°C to 180°C.

Furthermore, a fourth aspect of the present invention provides the readily tearable co-extruded multilayer barrier film according to any one of the first to third aspects of the present invention, in which, for a viscosity η_{b} of the modified polyolefin-based resin (b) and a viscosity η_{c} of the cyclic olefin-based resin (c), a viscosity ratio R_{η} = η_{c}/η_{b} is 0.2 or greater at a measurement temperature of 230°C and a shear rate of 122/s.

Furthermore, a fifth aspect of the present invention provides the readily tearable co-extruded multilayer barrier film according to any one of the first to fourth aspects of the present invention, in which the adhesive layer (II) and the adhesive layer (III) each contain a mixed resin of the modified polyolefin-based resin (b) modified with an unsaturated carboxylic acid or a derivative thereof, the cyclic olefin-based resin (c), and an unmodified polyolefin-based resin (d) as a main component, and a melt flow rate (hereinafter, also referred to as MFR) of the unmodified polyolefin-based resin (d) measured in accordance with JIS K 7210 is from 0.1 to 3.5 g/10 min.

Furthermore, a sixth aspect of the present invention provides the readily tearable co-extruded multilayer barrier film according to the fifth aspect of the present invention, in which the unmodified polyolefin-based resin (d) is a linear polyethylene-based resin.

Furthermore, a seventh aspect of the present invention provides the readily tearable co-extruded multilayer barrier film according to any one of the first to sixth aspects of the present invention, in which a thickness ratio R of a total thickness t of the adhesive layer (II) and the adhesive layer (III) to a thickness T of entire film, R = (t/T), is 0.10 or greater.

Furthermore, an eighth aspect of the present invention provides the readily tearable co-extruded multilayer barrier film according to any one of the first to seventh aspects of the present invention formed from a five-layered structure, in which a resin layer (IV) and a resin layer (V) each containing a polyolefin-based resin (e) as a main component are laminated in an order of (IV)/(II)/(I)/(III)/(V).

Furthermore, a ninth aspect of the present invention provides the readily tearable co-extruded multilayer barrier film according to any one of the first to eighth aspects of the present invention, in which an Elmendorf tear strength of the multilayer film measured in accordance with JIS K 7128-2 is 30 N/mm or less in a transverse direction (TD) relative to a machine direction (MD).

Furthermore, an tenth aspect of the present invention provides the readily tearable co-extruded multilayer barrier film according to any one of the first to ninth aspects of the present invention, in which the polar resin (a) is at least one type selected from the group consisting of olefin-based resins each having a polar group, polyamide-based resins, ethylene-vinyl alcohol copolymer-based resins, and polyester-based resins.

Furthermore, a eleventh aspect of the present invention provides the readily tearable co-extruded multilayer barrier film according to any one of the first to tenth aspects of the present invention, the barrier layer (I) is formed from two or more types of the polar resins (a) and is formed from a layered body having two or more layers.

Furthermore, a twelfth aspect of the present invention provides a packaging material using the readily tearable co-extruded multilayer barrier film according to any one of the first to eleventh aspects of the present invention.

### Effect of the Invention

According to the readily tearable co-extruded multilayer barrier film of the present invention, in the first aspect of the present invention, by being a multilayer film formed from at least three layers and having a layered body having a barrier layer (I) containing a polar resin (a) as a main component, and an adhesive layer (II) and an adhesive layer (III) laminated on both sides adjacent to the barrier layer, the adhesive layer (II) and the adhesive layer (III) each at least containing a modified polyolefin-based resin (b) modified with an unsaturated carboxylic acid or a derivative thereof, and a cyclic olefin-based resin (c), excellent readily tearable properties and low curling properties are achieved as well as excellent gas barrier properties, such as water vapor barrier properties, are achieved. Furthermore, a high tensile elastic modulus and excellent rigidity are achieved.

Furthermore, in the second aspect of the present invention, by setting a content of the cyclic olefin-based resin (c) relative to each of the entire adhesive layer (II) and the entire adhesive layer (III) to 10 wt.% to 80 wt.%, excellent readily tearable properties and low curling properties are achieved.

Furthermore, in the third aspect of the present invention, by setting the glass transition temperature measured in accordance with ISO 11357-3 of the cyclic olefin-based resin (c) to 100°C to 180°C, excellent readily tearable properties, linearly tearable properties, and low curling properties are achieved.

Furthermore, in the fourth aspect of the present invention, for the viscosity η_{b} of the modified polyolefin-based resin (b) and the viscosity η_{c} of the cyclic olefin-based resin (c), by setting the viscosity ratio R_{η} = η_{c}/η_{b} to 0.2 or greater at a measurement temperature of 230°C and a shear rate of 122/s, excellent readily tearable properties, linearly tearable properties, and low curling properties are achieved.

Furthermore, in the fifth aspect of the present invention, by allowing the adhesive layer (II) and the adhesive layer (III) to contain a mixed resin of the modified polyolefin-based resin (b) modified with an unsaturated carboxylic acid or a derivative thereof, the cyclic olefin-based resin (c), and the unmodified polyolefin-based resin (d) as a main component, and setting a melt flow rate (MFR) of the unmodified polyolefin-based resin (d) measured in accordance with JIS K 7210 to 0.1 to 3.5 g/10 min, excellent readily tearable properties, linearly tearable properties, and low curling properties are achieved.

Furthermore, in the sixth aspect of the present invention, by allowing the unmodified polyolefin-based resin (d) to be a linear polyethylene-based resin, excellent readily tearable properties, linearly tearable properties, and low curling properties are achieved as well as excellent interlayer strength is achieved.

Furthermore, in the seventh aspect of the present invention, by setting the thickness ratio R of the total thickness t of the adhesive layer (II) and the adhesive layer (III) to the thickness T of the entire film (t/T) to 0.10 or greater, excellent readily tearable properties, linearly tearable properties, and low curling properties are achieved.

Furthermore, in the eighth aspect of the present invention, by being formed from a five-layered structure, in which a resin layer (IV) and a resin layer (V) each containing a polyolefin-based resin (e) as a main component are laminated in the order of (IV)/(II)/(I)/(III)/(V), excellent gas barrier properties, readily tearable properties, linearly tearable properties, and low curling properties are achieved.

Furthermore, in the ninth aspect of the present invention, by setting an Elmendorf tear strength of the multilayer film measured in accordance with JIS K 7128-2 to 30 N/mm or less in a transverse direction (TD) relative to a machine direction (MD), excellent readily tearable properties is achieved.

Furthermore, in the tenth aspect of the present invention, by allowing the polar resin (a) to be at least one type selected from the group consisting of olefin-based resins each having a polar group, polyamide-based resins, ethylene-vinyl alcohol copolymer-based resins, and polyester-based resins, excellent gas barrier properties are achieved.

Furthermore, in the eleventh aspect of the present invention, by allowing the barrier layer (I) to be formed from two or more types of polar resins (a) and formed from a layered body having two or more layers, excellent gas barrier properties are achieved.

Furthermore, in the twelfth aspect of the present invention, a packaging material using the readily tearable co-extruded multilayer barrier film achieves excellent gas barrier properties as well as excellent readily tearable properties.

### MODE FOR CARRYING OUT THE INVENTION

Each item of the readily tearable co-extruded multilayer barrier film according to the present invention will be described in detail below. Note that, in the present invention, "as a main component" means being a major component among resin components constituting a layer and specifically means that 70 wt.% or greater, preferably 90 wt.% or greater, and more preferably 100 wt.%, relative to the amount of the resin components constituting the layer is contained.

Layer constituting readily tearable co-extruded multilayer barrier film

### (1) Barrier layer (I)

The barrier layer (I) of the present invention is a layer containing a polar resin (a) as a main component. Note that a polar resin means a resin containing a polar group or highly polar bond in the molecular structure of the resin. More specifically, the polar resin means a resin having a functional group, such as a hydroxy group, a carboxyl group, an amino group, an ester group, an isocyanate group, or a glycidyl group, as a polar group, or a resin having a bond, such as an ester bond, an amide bond, a urethane bond, a urea bond, or an ether bond, as a highly polar bond.

The barrier layer (I) is only required to be formed from at least one polar resin (a) described below and, for example, may have a single layer structure having a polyamide-based resin or an ethylene-vinyl alcohol copolymer-based resin as a main component or may be a multilayer structure such as a polyamide-based resin/ethylene-vinyl alcohol copolymer-based resin/polyamide-based resin.

Note that, in the barrier layer (I), additives such as nucleating agents, lubricants, thermal deterioration inhibitors, antiblocking agents, antistatic agents, UV absorbents, pigments, and release agents, can be added in the range that does not impair the effect of the present invention.

### (1-1) Polar resin (a)

The polar resin (a) is at least one type selected from the group consisting of olefin-based resins each having a polar group, polyamide-based resins, ethylene-vinyl alcohol copolymer-based resins, and polyester-based resins.

### (1-1-1) Olefin-based resin having polar group

Examples of the olefin-based resin having a polar group include silanemodified polyolefin and the like as well as resins corresponding to the modified polyolefin-based resin (b) described below. Furthermore, examples of the polyethylene-based resin include copolymers of ethylene and a polar group-containing monomer polymerized by a metal catalyst such as a metallocene catalyst, ethylene-vinyl acetate copolymers (EVA) polymerized by using an organic peroxide as a reaction initiator, ethylene-methyl acrylate copolymers (EMA), ethylene-ethyl acrylate copolymers (EEA), ethylene-acrylic acid copolymers (EAA), ethylene-acrylic acid-maleic anhydride ternary system copolymers, and the like. The melt flow rate (hereinafter, also referred to as MFR) of the olefin-based resin measured in accordance with JIS K 7210 under conditions at 190°C and at a load of 21.18 N (2.16 kg) is preferably 20 g/10 min or less from the perspective of film formation stability in high temperature formation. When the MFR is 20 g/10 min or less, film formation stability is enhanced due to increase of melt tension. Examples of a commercially available olefin-based resin having a polar group include "Rexpearl" available from Japan Polyethylene Corporation and the like.

### (1-1-2) Polyamide-based resin

As the polyamide-based resin, a polyamide obtained by condensation polymerization of lactams each having a ring with three or more members, polymerizable ω-amino acids, a dibasic acid and diamine or the like can be used. Specifically, polymers of ε-caprolactam, aminocaproic acid, enantholactam, 7-aminoheptanoic acid, 11-aminoundecanoic acid, 9-aminononanoic acid, α-pyrrolidone, α-piperidone, or the like, polymers obtained by polycondensation of diamine, such as hexamethylenediamine, nonamethylenediamine, undecamethylenediamine, dodecamethylenediamine, or meta-xylylenediamine, and dicarboxylic acid, such as terephthalic acid, isophthalic acid, adipic acid, sebacic acid, dodecane dibasic acid, or glutaric acid, or copolymers thereof, such as polyamide 4, polyamide 6, polyamide 7, polyamide 8, polyamide 11, polyamide 12, polyamide 66, polyamide 69, polyamide 610, polyamide 611, polyamide 612, polyamide 6T, polyamide 6/66, polyamide 6/12, polyamide 6/6T, polyamide 6I/6T, and MXD6 can be used, and two or more types of the polyamides can be also used. The terminals of the polyamide may be capped with monocarboxylic acids or monoamines. Examples thereof include polyamide in which terminals are capped with monocarboxylic acids each having from 2 to 22 carbons or monoamines. From the perspective of balance between formation stability during processing and heat resistance, polyamide 6/66 (hereinafter, also referred to as PA6/66) or polyamide 6 (hereinafter, also referred to as PA 6) is preferred. Examples of a commercially available polyamide-based resin include "Novamid" and "Akulon" available from DSM Japan Engineering Plastics KK, "Ultramid" available from BASF, "UBE NYLON" available from Ube Industries, Ltd., and the like.

The viscosity value of the polyamide described above is a value measured in accordance with ISO 307, ISO 1157, and ISO 1628 and is preferably from 150 to 300 cm³/g, and more preferably from 170 to 260 cm³/g. When the viscosity value is greater than 150 cm³/g, sufficient mechanical strength tends to be obtained, and when the viscosity value is less than 300 cm³/g, sufficient formability tends to be obtained.

### (1-1-3) Ethylene-vinyl alcohol copolymer-based resin

The ethylene-vinyl alcohol copolymer-based resin (hereinafter, also referred to as EVOH) is an ethylene-vinyl alcohol copolymer-based resin preferably having an ethylene content of 20 to 50 mol%, and more preferably having an ethylene content of 30 to 40 mol%. When the ethylene content is 20 mol% or greater, forming processability tends to be enhanced, and when the ethylene content is 50 mol% or less, sufficient gas barrier properties tend to be ensured. Furthermore, the melt flow rate (MFR) measured at 210°C and 21.168 N is preferably from 1 to 30 g/10 min, and more preferably from 2 to 10 g/10 min. The MFR of 1 g/10 min or greater is preferred because extrusion characteristics are excellent. On the other hand, when the MFR is 30 g/10 min or less, sufficient forming processability tends to be achieved.

The EVOH can be obtained by saponifying an ethylene-vinyl acetate copolymer. The ethylene-vinyl acetate copolymer can be produced by any known polymerization method such as solution polymerization, suspension polymerization, or emulsion polymerization, and the saponification of the ethylene-vinyl acetate copolymer can be performed by a known method. The degree of saponification of the vinyl acetate component is typically preferably 50 mol% or greater, and more preferably 90 mol% or greater. When the degree of saponification is in this range, high gas barrier properties or the like tend to be achieved.

The EVOH may be an EVOH obtained by copolymerizing an ethylenically unsaturated monomer that is copolymerizable in the range that does not impair the effect of the present invention. Examples of the monomer include olefins such as propylene, 1-butene, and isobutene; unsaturated acids such as acrylic acid, methacrylic acid, crotonic acid, (anhydrous) phthalic acid, (anhydrous) maleic acid, and (anhydrous) itaconic acid, or salts thereof or mono- or dialkyl esters each having from 1 to 18 carbons; acryl amides such as acrylamide, N-alkylacrylamide having from 1 to 18 carbons, N,N-dimethylacrylamide, 2-acrylamide propane sulfonic acid or salts thereof, acrylamide propyl dimethylamine or acid salts thereof or quaternary salts thereof; methacrylamides such as methacrylamide, N-alkylmethacrylamide having from 1 to 18 carbons, N,N-dimethylmethacrylamide, 2-methacrylamide propane sulfonic acid or salts thereof, and methacrylamide propyl dimethylamine or acid salts thereof or quaternary salts thereof; N-vinylamides such as N-vinylpyrrolidone, N-vinylformamide, and N-vinylacetamide; vinyl cyanides such as acrylonitrile and methacrylonitrile; vinyl ethers such as alkyl vinyl ether having from 1 to 18 carbons, hydroxy alkyl vinyl ether and alkoxy alkyl vinyl ether; vinyl halides such as vinyl chloride, vinylidene chloride, vinyl fluoride, vinylidene fluoride, and vinyl bromide; vinyl silanes such as trimethoxy vinyl silane; allyl acetate, allyl chloride, allyl alcohol, dimethyl allyl alcohol, trimethyl-(3-acrylamide-3-dimethylpropyl)-ammonium chloride, acrylamide-2-methylpropane sulfonic acid, and the like. Two or more types of EVOHs having ethylene contents or copolymer monomer compositions that differ each other may be mixed and used in the range described above. Examples of a commercially available EVOH include "Soarnol" available from Nippon Synthetic Chemical Industry Co., Ltd., "EVAL" available from Kuraray Co., Ltd., and the like.

### (1-1-4) Polyester-based resin

The polyester-based resin is a resin obtained by copolymerizing a dicarboxylic acid component and a glycol component. Examples of the dicarboxylic acid component that is copolymerizable include terephthalic acid, isophthalic acid, orthophthalic acid, naphthalene dicarboxylic acid, biphenyl dicarboxylic acid, cyclohexane dicarboxylic acid, adipic acid, azelaic acid, sebacic acid, and the like. Furthermore, examples of the glycol component that is copolymerizable include ethylene glycol, 1,3-propylene glycol, 1,2-propylene glycol, 1,4-butanediol, neopentyl glycol, 1,5- pentanediol, 1,6-hexanediol, diethylene glycol, cyclohexanediol, polyethylene glycol, polytetramethylene glycol, polycarbonatediol, and the like. Specific examples thereof include polyethylene terephthalate (PET) and polybutylene terephthalate (PBT), and "Bellpet" available from Bell Polyester Products, Inc., "DURANEX" available from Polyplastics Co., Ltd., and the like.

### (2) Adhesive layer (II) and adhesive layer (III)

The adhesive layers (II) and (III) of the present invention are layers to impart adhesiveness to the polar resin and tearable properties of the film and are layers each containing at least a modified polyolefin-based resin (b) modified with an unsaturated carboxylic acid or a derivative thereof and a cyclic olefin-based resin (c). Furthermore, an unmodified polyolefin-based resin (d) may be contained. Furthermore, for the modified polyolefin-based resin (b), the cyclic olefin-based resin (c), and the unmodified polyolefin-based resin (d) constituting the adhesive layer (II) and the adhesive layer (III), as long as the range described below is satisfied, the resin constituting each of the adhesive layer may be identical or different.

In the adhesive layer (II) and the adhesive layer (III), additives such as nucleating agents, lubricants, thermal deterioration inhibitors, antiblocking agents, antistatic agents, UV absorbents, pigments, and release agents, can be added in the range that does not impair the effect of the present invention.

### (2-1) Modified polyolefin-based resin (b)

The modified polyolefin-based resin (b) is used to adhere, for example, a polyamide-based resin or ethylene-vinyl alcohol copolymer and another layer such as a resin layer formed from a polyethylene-based resin or a resin layer formed from a polyethylene-based resin and a cyclic olefin or a resin layer formed from a polypropylene-based resin. In the present invention, a modified polyolefin-based resin obtained by subjecting a polyolefin-based resin containing ethylene or propylene as a major constituent to graft modification with an unsaturated carboxylic acid or a derivative thereof.

In the case where the polyolefin-based resin is a polyethylene-based resin, examples include a homopolyethylene or an ethylene-α-olefin copolymer that is polymerized by a metallocene catalyst, a Ziegler catalyst, or a Phillips catalyst, a high-pressure low-density polyethylene polymerized by using an organic peroxide as a reaction initiator, and the like. From the perspective of interfacial strength with the cyclic olefin-based resin, an ethylene-α-olefin copolymer having a linear molecular structure is preferred. The density of the polyethylene-based resin may be any density as long as the density is in the typical polyethylene density range, which is from 0.860 g/cm³ to 0.970 g/cm³. The type of the α-olefin to be copolymerized with ethylene is typically an α-olefin having from 3 to 8 carbons, and specific examples thereof include propylene, butene-1, pentene-1, hexene-1, heptene-1, octene-1, 4-methylpentene-1, and the like. Note that the density of the resin in the present invention is a value measured based on JIS K 6922-2.

Furthermore, the melt flow rate (MFR) of the polyethylene-based resin at 190°C is preferably 20 g/10 min or less from the perspective of film formation stability in high temperature formation. When the MFR is 20 g/10 min or less, film formation stability tends to be enhanced due to increase of melt tension. Note that the value of the MFR in the present invention is a value measured under conditions at 190°C and a load of 21.18 N (2.16 kg) in accordance with JIS K 7210 unless otherwise noted.

Furthermore, in the case where the polyolefin-based resin is a polypropylene-based resin, a propylene homopolymer, and any random copolymer or block copolymer of propylene and another α-olefin such as ethylene or butene-1, and the like can be used. One type or a blend of two or more types of the polymers described above may be employed. From the perspective of interfacial strength with the cyclic olefin-based resin, 50 wt.% or greater of a linear ethylene-propylene random block copolymer obtained by using a metallocene catalyst is preferably contained. Examples of such a resin that is commercially available include WINTEC (registered trademark) series available from Japan Polypropylene Corporation and the like.

Furthermore, the melt flow rate (MFR) of the polypropylene-based resin at 230°C is preferably 15 g/10 min or less from the perspective of film formation stability in high temperature formation. When the MFR is 15 g/10 min or less, film formation stability tends to be enhanced due to increase of melt tension.

Examples of the unsaturated carboxylic acid to be graft-polymerized with the polyolefin-based resin described above include unsaturated monocarboxylic acids, such as acrylic acid, methacrylic acid, furan acid, crotonic acid, vinyl acetate, and pentenoic acid, α,β-unsaturated dicarboxylic acids, such as maleic acid, fumaric acid, citraconic acid, and itaconic acid, anhydrides of these, and the like. Among these monomers containing a functional group that undergoes graft modification, α,β-unsaturated dicarboxylic acids, such as maleic acid, fumaric acid, citraconic acid, and itaconic acid, or anhydrides of these, which are carboxylic acid groups or acid anhydride group-containing monomers, are preferred. In particular, maleic anhydride (MAH) is preferably used from the perspectives of adhesive strength to a substrate, miscibility with a resin, and economical efficiency. The amount of the α,β-unsaturated carboxylic acid or a derivative thereof to be graft-polymerized preferably corresponds to 0.02 to 5.0 wt.% relative to the total amount of the modified polyolefin resin.

Examples of the method of graft modification include a melting method in which a polymerized resin component is reacted with a monomer containing a functional group to be graft-modified in the presence of a radical generator in an extruder, and a solution method in which reaction is performed in a solution. Examples of the radical generator include organic peroxides, dihydro aromatic compounds, dicumyl compounds, and the like. As the organic peroxide, for example, hydroperoxide, dicumyl peroxide, t-butylcumyl peroxide, dialkyl(allyl)peroxide, diisopropylbenzene hydroperoxide, dipropionyl peroxide, dioctanoyl peroxide, benzoyl peroxide, peroxysuccinic acid, peroxyketal, 2,5-dimethyl-2,5-di(t-butylperoxy)hexyne, 2,5-dimethyl-2,5-di(t-butylperoxy)hexane, t-butyloxyacetate, t-butyl peroxyisobutyrate, and the like are preferably used. Examples of the dihydro aromatic compound include dihydroquinoline or derivatives thereof, dihydrofuran, 1,2-dihydrobenzene, 1,2-dihydronaphthalene, 9,10-10 dihydrophenanthrene, and the like. Examples of the dicumyl compound include 2,3-dimethyl-2,3-diphenylbutane, 2,3-diethyl-2,3-diphenylbutane, 2,3-diethyl-2,3-di(p-methylphenyl)butane, 2,3-diethyl-2,3-di(p-bromophenyl)butane, and the like. In particular, 2,3-diethyl-2,3-diphenylbutane is preferably used.

Note that, for the modified polyolefin-based resin, as a modifying material, an elastomer such as ethylene-α-olefin copolymer rubber such as ethylene propylenebased rubber, butadiene-based rubber, isobutylene rubber, isoprene-based rubber, natural rubber, and nitrile rubber, may be added.

Examples of a commercially available modified polyolefin-based resin include "MODIC" available from Mitsubishi Chemical Corporation, "ADMER" available from Mitsui Chemicals, Inc., and the like.

### (2-2) Cyclic olefin-based resin (c)

Examples of the cyclic olefin-based resin (c) include norbornene-based polymers, vinyl alicyclic hydrocarbon polymers, cyclic conjugated diene polymers, and the like. Among these, a norbornene-based polymer is preferred. Furthermore, examples of the norbornene-based polymer include a ring-opened polymer of a norbornene-based monomer (hereinafter, also referred to as "COP)", a norbornene-based copolymer obtained by copolymerizing a norbornene-based monomer and an α-olefin such as ethylene (hereinafter, also referred to as "COC"), and the like. Furthermore, hydrogenated products of COP and COC can be also used.

Examples of the COC include cyclic olefin copolymers obtained from a linear monomer of α-olefin, such as ethylene, propylene, butene-1, pentene-1, hexene-1, heptene-1, and octene-1, and a cyclic monomer, such as tetracyclododecene or norbornene. More specific examples include cyclic olefin copolymers formed from a copolymer of the linear monomers described above and a cyclic olefin, such as monocycloalkene having from 3 to 20 carbons or bicyclo[2.2.1]-2-heptene (norbornene) and derivatives thereof, tricyclo[4.3.0.12,5]-3-decene and derivatives thereof, tetracyclo[4.4.0.1.2,5.17,10]-3-dodecene and derivatives thereof, pentacyclo[6.5.1.13,6.02,7.09,13]-4- pentadecene and derivatives thereof, pentacyclo[7.4.0.12,5.19,12.08,13]-3-pentadecene and derivatives thereof, pentacyclo[8.4.0.12,5.19,12.08,13]-3-hexadecene and derivatives thereof, pentacyclo[6.6.1.13,6.02,7.09,14]-4-hexadecene and derivatives thereof, hexacyclo[6.6.1.13,6.110,13.02,7.09,14]-4-heptadecene and derivatives thereof, heptacyclo[8.7.0.12,9.14,7.111,17.03,8.012,16]-5-eicosene and derivatives thereof, heptacyclo[8.7.0.13,6.110,17.112,15.02,7.011,16]-4-eicosene and derivatives thereof, heptacyclo[8.8.0.12,9.14,7.111,18.03,8.012,17]-5-henicosene and derivatives thereof, octacyclo[8.8.0.12,9.14, 7.111,18.113,16.03,8.012, 17]-5-docosene and derivatives thereof, nonacyclo[10.9.1.14,7.113,20.115,18.02,10.03,8.012,21.014,19]-5-pentacosene and derivatives thereof, and the like. A single type of the linear monomers or the cyclic monomers can be used alone, or two or more types of the linear monomers and/or the cyclic monomers can be used in combination. Furthermore, a single type of such cyclic olefin copolymers can be used alone, or a combination of these can be used. Furthermore, for the cyclic olefin-based resin (c), the COP and COC can be used in combination. In this case, various performances of the COP and the COC can be imparted.

From the perspective of dispersibility in polyethylene, the cyclic olefin-based resin (c) is preferably the COC. Furthermore, the COC is preferably an ethylene-cyclic olefin copolymer in which the linear monomer is ethylene. Furthermore, the cyclic monomer is preferably norbornene or the like.

Furthermore, the glass transition temperature of the cyclic olefin-based resin (c) is preferably from 70°C to 180°C and, in particular, from 100°C to 180°C, more preferably 115°C or higher, even more preferably 150°C or lower, and particularly preferably 140°C or lower. The glass transition temperature is measured in accordance with ISO 11357-3. Use of an ethylene-cyclic olefin copolymer having the glass transition temperature of 100°C or higher, and preferably 115°C or higher, in a layer directly adjacent to the barrier layer (I) is more preferred because excellent readily linearly tearable properties can be exhibited also in the transverse direction (TD) as well as the machine direction (MD). Two or more types of cyclic olefin-based resins (c) having various glass transition temperatures may be used.

The dispersion state effective for the readily linearly tearable properties is a sea-island structure in the submicron order, in which the cyclic olefin-based resin (c) stretched in MD is present as an island in a sea of the modified polyolefin-based resin (b) and/or the unmodified polyolefin-based resin (d).

In the case where the layer directly adjacent to the barrier layer (I) contains the cyclic olefin-based resin (c) like the present invention, when the glass transition temperature of the cyclic olefin-based resin is too low, the viscosity of the cyclic olefin-based resin is less likely to be increased during cooling process, the dispersion state that is effective for the readily linearly tearable properties described above cannot be formed due to relaxation of the MD orientation, and thus the readily linearly tearable properties may be deteriorated. Furthermore, when the glass transition temperature of the cyclic olefin-based resin (c) is higher than 180°C, excessively high rigidity may deteriorate extrusion characteristics or film formation stability.

Furthermore, the viscosity ratio, R_{η} = η_{c}/η_{b}, of the viscosity η_{c} of the cyclic olefin-based resin (c) to the viscosity η_{b} of the modified polyolefin-based resin (b) is preferably 0.2 or greater at 230°C and at a shear rate of 122/s, the viscosities being measured under conditions at the orifice length of 10 mm, the orifice diameter of 1 mm, the barrel diameter of 9.55 mm, and the orifice inflow angle being flat, using JIS K 7199 as a reference. When the viscosity ratio R_{η} is 0.2 or greater, the viscosity balance between the modified polyolefin-based resin (b) and the cyclic olefin-based resin (c) in a formation temperature is achieved, the dispersion state that is effective for the readily linearly tearable properties is formed, and the readily tearable properties tend to be enhanced.

The ethylene-cyclic olefin copolymer preferably has the content ratio of ethylene/cyclic olefin, in terms of weight ratio, of 15 to 40/85 to 60, more preferably 15 to 35/85 to 65, and even more preferably 20 to 30/80 to 70. The ethylene content ratio in this range is preferred because rigidity of the film, readily tearable properties, processing stability, formability, and bag formation suitability are enhanced.

Furthermore, the weight average molecular weight of the cyclic olefin-based resin (c) is preferably from 5,000 to 500,000, and more preferably from 7,000 to 300,000.

Examples of a commercially available product that can be used as the cyclic olefin-based resin (c) include "ZEONOR" available from Zeon Corporation and the like as the ring-opened polymer of a norbornene-based monomer (COP) and "APEL" available from Mitsui Chemicals, Inc., "TOPAS" available from Polyplastics Co., Ltd., and the like as the norbornene-based copolymer (COC). Because the content ratio of the norbornene-based monomer is in the range described above and because of processability and the like, Grade 8007F, 7010F, 5013F, and 6013F of TOPAS and the like are preferred.

### (2-3) Unmodified polyolefin-based resin (d)

The unmodified polyolefin-based resin (d) is a constituent besides the modified polyolefin-based resin (b) and the cyclic olefin-based resin (c) constituting the adhesive layer (II) and the adhesive layer (III) and may be formed from one type or two or more types of resins. Examples of the unmodified polyolefin-based resin (d) include polyethylene-based resins or polypropylene-based resins. From the perspective of interfacial strength with the cyclic olefin-based resin, a polyethylene-based resin is preferred.

The polyethylene-based resin may be one type or a mixture of two or more types selected from homopolyethylenes or ethylene-α-olefin copolymers polymerized by using a metallocene catalyst, a Ziegler catalyst, a Phillips catalyst, or the like, high-pressure low-density polyethylenes polymerized by using an organic peroxide as a reaction initiator, ethylene-vinyl acetate copolymers (EVA), ethylene-methylacrylate copolymers (EMA), ethylene-ethylacrylate copolymers (EEA), ethylene-acrylic acid copolymers (EAA), ethylene-acrylic acid-maleic anhydride ternary system copolymers, and the like. From the perspective of interfacial strength with the cyclic olefin-based resin, a linear polyethylene-based resin is preferred. Furthermore, the density of the polyethylene-based resin may be any density as long as the density is in the typical polyethylene density range, which is from 0.860 g/cm³ to 0.970 g/cm³. The density range is preferably from 0.860 g/cm³ to 0.935 g/cm³.

The type of the α-olefin to be copolymerized with ethylene is typically an α-olefin having from 3 to 8 carbons, and specific examples thereof include propylene, butene-1, pentene-1, hexene-1, heptene-1, octene-1, 4-methylpentene-1, and the like.

Furthermore, as the polypropylene-based resin, examples thereof include a propylene homopolymer, random copolymers or block copolymers of propylene and another α-olefin such as ethylene or butene-1, and the like, and any of these can be used. One type or a blend of two or more types of the polymers described above may be employed. From the perspective of interfacial strength between the linear polyethylene-based resin and the cyclic olefin-based resin, 50 wt.% or greater of a linear ethylene-propylene random block copolymer obtained by using a metallocene catalyst is preferably contained. Examples of a commercially available resin include WINTEC (registered trademark) series available from Japan Polypropylene Corporation and the like.

At 190°C in the case of a polyethylene-based resin or at 230°C in the case of a polypropylene-based resin, the melt flow rate of the unmodified polyolefin-based resin (d) is preferably from 0.05 to 20 g/10 min, more preferably from 0.1 to 10 g/10 min, and even more preferably from 0.1 to 3.5g/10 min. The melt flow rate of 0.1 to 3.5g/10 min is more preferred because viscosity balance with the cyclic olefin resin becomes excellent, the cyclic olefin-based resin in the adhesive layer (II) and the adhesive layer (III) forms a dispersion structure that is stretched in MD, and excellent linearly tearable properties is achieved.

Furthermore by setting the viscosity ratio η_{c}/η_{d} of the viscosity η_{c} of the cyclic olefin-based resin (c) to the viscosity η_{d} of the unmodified polyolefin-based resin (d) at the shear rate of 122/s at 190°C to 250°C to 0.2 or greater, a multilayer film having even better linearly tearable properties is obtained.

### (3) Resin layer (IV) and resin layer (V)

In the present invention, in the multilayer film that is at least three-layered having a layered body having the barrier layer (I) containing the polar resin (a) as a main component, and the adhesive layer (II) and the adhesive layer (III) each laminated on both sides adjacent to the barrier layer, the adhesive layer (II) and the adhesive layer (III) each at least containing the modified polyolefin-based resin (b) modified with an unsaturated carboxylic acid or a derivative thereof, and the cyclic olefin-based resin (c), more preferably, a resin layer (IV) and a resin layer (V) can be contained as other resin layers. The resin layer (IV) and the resin layer (V) are layers containing the polyolefin-based resin (e) as a main component, and the polyolefin-based resin (e) in each of the resin layers may be identical or different as long as the range described below is satisfied.

Note that, in the resin layer (IV) and the resin layer (V), additives such as nucleating agents, lubricants, thermal deterioration inhibitors, antiblocking agents, antistatic agents, UV absorbents, pigments, and release agents, can be added in the range that does not impair the effect of the present invention. Furthermore, the cyclic olefin-based resin can be added as a modifying material.

### (3-1) Polyolefin-based resin (e)

The polyolefin-based resin (e) is not particularly limited as long as the polyolefin-based resin (e) is a polyolefin-based resin, and examples thereof include polyethylene-based resins or polypropylene-based resins, the modified polyolefin-based resins, and the like.

The polyethylene-based resin may be one type or a blended material of two or more types selected from homopolyethylenes or ethylene-α-olefin copolymers polymerized by using a metallocene catalyst, a Ziegler catalyst, a Phillips catalyst, or the like, high-pressure low-density polyethylenes polymerized by using an organic peroxide as a reaction initiator, ethylene-vinyl acetate copolymers (EVA), ethylene-methylacrylate copolymers (EMA), ethylene-ethylacrylate copolymers (EEA), ethylene-acrylic acid copolymers (EAA), ethylene-acrylic acid-maleic anhydride ternary system copolymers, and the like. Furthermore, the density of the polyethylene-based resin may be any density as long as the density is in the typical polyethylene density range, which is from 0.860 g/cm³ to 0.970 g/cm³. The type of the α-olefin to be copolymerized with ethylene is identical to those described for the unmodified polyolefin-based resin (d) described above.

Furthermore, the melt flow rate (MFR) of the polyethylene-based resin at 190°C is preferably 20 g/10 min or less from the perspective of film formation stability in high temperature formation. When the MFR is 20 g/10 min or less, film formation stability tends to be enhanced due to increase of melt tension.

As the polypropylene-based resin, examples thereof include random copolymer or block copolymer of another α-olefin such as a propylene homopolymer, propylene and ethylene, or butene-1, and the like, and any of these can be used. One type or a blend of two or more types of the polymers described above may be employed. From the perspective of interfacial strength between the adhesive layer (II) and the adhesive layer (III), 50 wt.% or greater of a linear ethylene-propylene random block copolymer obtained by using a metallocene catalyst is preferably contained. Examples of a commercially available resin include WINTEC (registered trademark) series available from Japan Polypropylene Corporation and the like.

Furthermore, the melt flow rate (MFR) of the polypropylene-based resin at 230°C is preferably 15 g/10 min or less from the perspective of film formation stability in high temperature formation. When the MFR is 15 g/10 min or less, film formation stability tends to be enhanced due to increase of melt tension.

The modified polyolefin-based resin may be any modified polyolefin-based resin as long as the range described in (2-1) above is satisfied.

### Readily tearable co-extruded multilayer barrier film

The readily tearable co-extruded multilayer barrier film according to an embodiment of the present invention is, as described above, formed from at least three layers and is a layered body, in which a specific barrier layer (I) and an adhesive layer (II) and an adhesive layer (III) are laminated in a manner that the adhesive layer (II) and the adhesive layer (III) are laminated on both sides adjacent to the barrier layer, that is, has a layer structure of (II)/(I)/(III). Furthermore, the film, in which the lamination is performed in a manner that the thickness ratio R of the total thickness t of the adhesive layer (II) and the adhesive layer (III) to the thickness T of the entire film (t/T), to 0.10 or greater, is more preferred because excellent readily tearable properties and linearly tearable properties are achieved. The readily tearable coextruded multilayer barrier film is only required to have a layered body in which a specific barrier layer (I) and an adhesive layer (II) and an adhesive layer (III) are laminated in a manner that the adhesive layer (II) and the adhesive layer (III) are laminated on both sides adjacent to the barrier layer, and to satisfy the specific thickness ratio R, and thus, for example, the number of laminated layers is not specifically limited, and examples thereof include a five-layered film, in which the resin layer (IV) and the resin layer (V) are laminated in the order of (IV)/(II)/(I)/(III)/(V). For example, when a difference between the melting points of the resin layer (IV) and the resin layer (V) is set, a large difference between the melting points of the inner layer and the outer layer of the film can be achieved, and thus a greater applicable range for various filling machines, heat sealing at a low temperature, high-speed filling, and the like are made possible.

The thickness of the readily tearable co-extruded multilayer barrier film is preferably from 20 to 200 µm. The thickness of the multilayer film is 20 µm or greater, excellent secondary formability can be achieved. Furthermore, when the thickness of the multilayer film is in the range of 30 to 200 µm, the multilayer film can be used as a packaging material by heat-sealing the layers exposed to the outermost surfaces.

The readily tearable co-extruded multilayer barrier film of the present invention is produced by directly laminating the barrier layer (I), the adhesive layer (II), and the adhesive layer (III) by a co-extrusion method.

An example is a co-extrusion method, in which a polyamide-based resin used for the barrier layer (I), a modified polyolefin-based resin and a cyclic olefin-based resin used for the adhesive layer (II) and the adhesive layer (III), and a polyolefin-based resin used for the resin layer (IV) and the resin layer (V) are each heat-melted in a separate extruder, then laminated in a manner to satisfy the positional relationship in the order of (IV)/(II)/(I)/(III)/(V) in the molten state by a method, such as a co-extrusion multilayer die method or a feed block method, and formed into a film form by air-cooled inflation, water-cooled inflation, a T die-chill roll method, or the like. This co-extrusion method is preferred because the co-extrusion method can adjust the ratio of thicknesses of the layers in a relatively unrestricted manner and a multilayer film having excellent cleanliness and excellent cost effectiveness can be obtained.

The readily tearable co-extruded multilayer barrier film produced by the production method described above does not require secondary processing, such as ordinary stretching process to impart readily tearable properties, and is characterized by exhibiting the readily tearable properties only by the film formation processing by the co-extrusion method. This is because, for example, when the film is formed by the co-extrusion inflation molding in the specific layer structure described above, a dispersion structure solidified by cooling in a state in which the cyclic olefin-based resin in the adhesive layer (II) and the adhesive layer (III) is stretched in the machine direction (MD) is formed. Therefore, because the viscosity balance between the polyethylene-based resin and the cyclic olefin under the processing temperature during the co-extrusion significantly affects the dispersion structure, optimal cyclic olefin-based resin needs to be selected particularly based on the processing temperature. For example, in the case where a polyamide 6/66 copolymer resin is used for the barrier layer (I), because the processing temperature by the co-extrusion method reaches approximately 210 to 250°C, the glass transition temperature of the cyclic olefin-based resin used for the adhesive layer (II) and the adhesive layer (III) is more preferably from 100°C to 140°C, which is relatively high.

Furthermore, the readily tearable co-extruded multilayer barrier film according to another embodiment of the present invention has a layered body in which the specific barrier layer (I) and the adhesive layer (II) are at least laminated in a manner that the adhesive layer (II) is laminated adjacent to the barrier layer, that is a layer structure of (II)/(I). In this film, the layer structure, the number of laminated layers, and the like are identical to those of the film having the adhesive layers on both of the sides of the barrier layer (I) except for no need to contain one of the adhesive layers adjacent to the barrier layer (I).

### 3. Packaging material

Examples of the packaging material formed from the readily tearable coextruded multilayer barrier film of the present invention include packaging bags and packaging containers used for food, medicine, medical apparatus, industrial components, general goods, and magazines, and the like.

Examples of the packaging bag include packaging bags formed by heat-sealing inner layers of the readily tearable co-extruded multilayer barrier film of the present invention on top of the other. Two sheets of the readily tearable co-extruded multilayer barrier film are cut to a desired size of a packaging bag, piling these and forming a bag shape by heat-sealing three sides, and then contents are filled from the side that is not heat-sealed and then the side is heat-sealed to seal and use as a packaging bag. Furthermore, similarly, two sheets of the readily tearable co-extruded multilayer barrier film are cut to a desired size of a packaging bag, piling these and forming a pouch-shaped bag, and then contents are filled from an opening and then heat-sealing is performed to seal, for use as a standing pouch packaging bag. Furthermore, one sheet of the readily tearable co-extruded multilayer barrier film can be used in a form of horizontal pillow packaging or vertical pillow packaging. Furthermore, a packaging bag can be formed by placing an inner layer of the readily tearable co-extruded multilayer barrier film and another film that can be heat-sealed on top of the other and performing heat-sealing. In this case, as such another film to be used, a film of LDPE, EVA, or the like having a relatively weak mechanical strength can be used.

In the packaging material using the readily tearable co-extruded multilayer barrier film of the present invention, any tearing starting part, such as V notch, I notch, perforation, or micropore, to enhance opening capability and reduce the initial tear strength is preferably formed. Examples of the formation part of notch or the like include seal portions, top and bottom end portions of a packaging material, left and right folded portions, back sealed portions of pillow packaging. Based on the packaging material form and notch formation part, sealability of the inner portion can be ensured by providing a seal portion having a crescent shape or the like around the notch in a manner that the notch is surrounded.

Furthermore, examples of the packaging container include deep draw molding products (bottom material having an opening in an upper portion) each obtained by secondary forming of the readily tearable co-extruded multilayer barrier film of the present invention, and representative examples include bottom materials for vacuum packaging bags for food, bottom materials of blister pack, and the like. The material of lid material to seal each of these bottom materials are not particularly specified as long as the material can be heat-sealed with the bottom material. Because both sides can be simultaneously torn to unseal, the readily tearable coextruded multilayer barrier film of the present invention is preferably used as the lid material.

Examples of the secondary forming method include a vacuum forming method, a pressure forming method, a vacuum pressure forming method, and the like. Among these, vacuum forming is preferred because the film or sheet can be formed in-line by a packaging machine to fill contents.

Note that, in general, the machine direction (MD) of the packaging material is an axis parallel with the line direction during filling or during bag formation and corresponds to the machine direction (MD) of the original film material. For example, in the case of a horizontal pillow packaging material, the length direction of the back sealing corresponds to the machine direction (MD) of the packaging material and also corresponds to the machine direction of the film (MD).

### EXAMPLES

Examples and Comparative Examples of the present invention are described below.

### Used raw material

### (1-1) Polar resin (a)

- PA6/66 copolymer, density: 1130 kg/m³, viscosity value: 246 cm³/g ("Novamid 2030CA", available from DSM Japan Engineering Plastics KK)
- Ethylene-vinyl alcohol copolymer, ethylene content: 38 mol%, MFR (210°C, 2160 g): 4.0 g/10 min, density: 1.17 g/cm³ ("Soarnol ET3803RB" available from Nippon Synthetic Chemical Industry Co., Ltd.)

### (1-2) Modified polyolefin-based resin (b)

• Modified PE 1: Maleic acid graft-modified polyethylene (available from Mitsubishi Chemical Corporation), density: 0.920 g/cm³, MFR: 3 g/10 min, viscosity: 526 Pa·s (measurement temperature: 230°C, shear rate: 122/s)
• Modified PE 2: Maleic acid graft-modified polyethylene ("MODIC M522" available from Mitsubishi Chemical Corporation), density: 0.920 g/cm³, MFR: 1.2 g/10 min, viscosity: 1260 Pa·s (measurement temperature: 230°C, shear rate: 122/s)

### (1-3) Cyclic olefin-based resin (c)

- COC 1: 8007 F: glass transition temperature: 78°C ("TOPAS 8007F-600" available from Polyplastics Co., Ltd.)
- COC 2: 7010 F: glass transition temperature: 110°C ("TOPAS 7010F-600" available from Polyplastics Co., Ltd.)
- COC 3: 6013 F: glass transition temperature: 138°C ("TOPAS 6013F-04" available from Polyplastics Co., Ltd.)
- COC 4: 5013 F: glass transition temperature: 134°C ("TOPAS 5013F-04" available from Polyplastics Co., Ltd.)

### (1-4) Unmodified polyolefin-based resin (d)

- LLDPE 1: UF320: density: 0.922 g/cm³, MFR: 0.9 g/10 min ("NOVATEC LL UF320" available from Japan Polyethylene Corporation)
- LLDPE 2: NC566A: density: 0.918 g/cm³, MFR: 3.8 g/10 min ("HARMOREX NC566A" available from Japan Polyethylene Corporation)

### (1-5) Polyolefin-based resin (e)

- LLDPE 3: NF444A: density: 0.912 g/cm³, MFR: 2.0 g/10 min ("HARMOREX NF444A" available from Japan Polyethylene Corporation)
- LLDPE 1: UF320: density: 0.922 g/cm³, MFR: 0.9 g/10 min ("NOVATEC LL UF320" available from Japan Polyethylene Corporation)
- LDPE 1: LE306: density: 0.919 g/cm³, MFR: 1.0 g/10 min ("NOVATEC LD LE306" available from Japan Polyethylene Corporation)
- LLDPE 4: UF425: density: 0.926 g/cm³, MFR: 0.8 g/10 min ("NOVATEC LL UF425" available from Japan Polyethylene Corporation)

### Film formation

### (2-1) Co-extrusion five-layered air-cooled inflation film formation

Forming machine: Five-type five-layered air-cooled inflation forming machine (available from Placo Co., Ltd.)
Extruder: φ40 mm x 5 extruders
Die: φ150 mm (stack die)

### Physical property evaluation methods

### (3-1) Viscosity ratio R_{η}

Using JIS K 7199 as a reference, the melt viscosities were measured by using the following instrument. For the obtained melt viscosities, the viscosity ratio R_{η} was calculated by using values at the shear rate of 122/s.
Instrument: Capirograph 1B (available from Toyo Seiki Seisaku-sho, Ltd.)
Orifice length: 10 mm
Orifice diameter: 1 mm
Barrel diameter: 9.55 mm
Orifice inflow angle: Flat
Measurement temperature: 230°C

### (3-2) Amount of shift L

As the index of the linearly tearable properties, the amount of shift L was measured by the method describe below.

### (3-2-1) Test piece

A strip-like test piece was formed by cutting 50 mm along the film machine direction (MD) and 250 mm along the transverse direction thereof (TD), and a reference line was drawn on the test piece along the TD in a manner that the short side, which was 50 mm, was equally divided into 25 mm. In addition, 50 mm notch was formed along the reference line from one of the short sides.

### (3-2-2) Jig for measurement

A paperboard having a length of 250 mm, a width of 30 mm, and a thickness of approximately 4 mm was used. Note that, in the present test, four sheets of the paperboards each having a thickness of approximately 1 mm were laminated.

### (3-2-3) Tester

Instrument: Tensilon Universal Tester, available from Orientec Co., Ltd.
Distance between chucks: 65 mm
Tensile speed: 500 mm/min
Measurement environment: Temperature at 23°C, humidity at 50%

### (3-2-4) Measurement of amount of shift L

The strip-like test piece was fixed on a jig for measurement by tape or the like in a manner that the reference line is along the long side of the jig. At the test piece end portion which had the notch and which was branched into two, the side fixed to the jig was fixed to a chuck at the upper portion of the tester, and the other side was fixed to a chuck at the bottom portion of the tester in a manner that the test piece was tilted at 45° relative to the tensile direction of the tester. The test piece was torn at the predetermined tensile speed, and the amount of shift L from the reference line at the end portion of the tearing was measured by a scale. A smaller amount of shift L indicates a linear tearing along the reference line.

### (3-3) Elmendorf tear strength

Using JIS K 7128-2 as a reference, the Elmendorf tear strength was evaluated by using the following instrument. Note that the value is based on the measurement direction which was a transverse direction (TD) relative to the machine direction of the film.
Instrument: Digital Elmendorf Tearing Tester model SA (available from Toyo Seiki Seisaku-sho, Ltd.)
Measurement environment: Temperature at 23°C, humidity at 50%

### (4) Readily linearly tearable properties

From the results of the amount of shift L of (3-2) and Elmendorf tear strength of (3-3) described above, the readily linearly tearable properties were evaluated as described below.
Readily linearly tearable properties double circle: Amount of shift was less than 25 mm, and the tear strength was 30 N/mm or less.
Readily linearly tearable properties circle: Amount of shift was 25 mm or greater, and the tear strength was 30 N/mm or less.
Readily linearly tearable properties cross: Amount of shift was 25 mm or greater, and the tear strength was greater than 30 N/mm.

### (5) Low curling properties

The curling properties of the entire film were visually observed, and the case with small curling was evaluated as "circle", and the case with large curling was evaluated as "cross".

### Example 1

Using the used raw materials described above, a five-layered inflation film which was obtained by laminating in the order of resin layer (IV)/adhesive layer (II)/barrier layer (I)/adhesive layer (III)/resin layer (V) by the co-extrusion air-cooled inflation method described in (2) above was obtained. The thicknesses of the layers were set to, from the side of the resin layer (IV), 30/10/20/10/30 µm, and the blow ratio was set to 1.4. The thickness ratio R of the adhesive layer relative to the entire film was set to 0.20, and the glass transition temperature of the cyclic olefin-based resin in the adhesive layer (II) and the adhesive layer (III) was set to 110°C. For the barrier layer (I), 2030CA, which was a PA6/66 copolymer, was used. The details of the resin types and the layer structure and the evaluation results are shown in Table 1.

### Example 2

A five-layered inflation film, in which the glass transition temperature of the cyclic olefin-based resin in the adhesive layer (II) and the adhesive layer (III) of Example 1 described above was changed to 138°C, was obtained. The details of the resin types and the layer structure and the evaluation results are shown in Table 1.

### Example 3

A five-layered inflation film, in which the thicknesses of the layers of Example 1 described above were changed to, from the adhesive layer (IV) side, 30/30/30/30/30 µm and the thickness ratio R was changed to 0.40, was obtained. The blow ratio was set to 1.2. The viscosity ratios η_{c}/η_{d} at 190°C to 250°C of the cyclic olefin-based resin (c) and the unmodified polyolefin-based resin (d) were set to 0.26 to 2.4. The details of the resin types and the layer structure and the evaluation results are shown in Table 1.

### Example 4

A five-layered inflation film, in which the thicknesses of the layers of Example 1 described above were changed to, from the adhesive layer (IV) side, 40/10/30/10/40 µm and the thickness ratio R was changed to 0.15, was obtained. The viscosity ratios η_{c}/η_{d} at 190°C to 250°C of the cyclic olefin-based resin (c) and the unmodified polyolefin-based resin (d) were set to 0.26 to 2.4. The details of the resin types and the layer structure and the evaluation results are shown in Table 1.

### Example 5

A five-layered inflation film, in which the thicknesses of the layers of Example 2 described above were changed to, from the adhesive layer (IV) side, 30/10/10/10/30 µm and the thickness ratio R was changed to 0.22, was obtained. The details of the resin types and the layer structure and the evaluation results are shown in Table 1.

### Example 6

A five-layered inflation film, in which the thicknesses of the layers of Example 2 described above were changed to, from the adhesive layer (IV) side, 20/20/10/20/20 µm and the thickness ratio R was changed to 0.44, was obtained. The details of the resin types and the layer structure and the evaluation results are shown in Table 1.

### Example 7

A five-layered inflation film, in which the thicknesses of the layers of Example 2 described above were changed to, from the adhesive layer (IV) side, 20/10/10/10/20 µm and the thickness ratio R was changed to 0.29, was obtained. The details of the resin types and the layer structure and the evaluation results are shown in Table 1.

### Example 8

A five-layered inflation film, in which the thicknesses of the layers of Example 2 described above were changed to, from the adhesive layer (IV) side, 20/20/20/20/20 µm and the thickness ratio R was changed to 0.40, was obtained. The details of the resin types and the layer structure and the evaluation results are shown in Table 2.

### Example 9

Using the used raw materials described above, a five-layered inflation film which was obtained by laminating in the order of resin layer (IV)/adhesive layer (II)/barrier layer (I)/adhesive layer (III)/resin layer (V) by the co-extrusion air-cooled inflation method described in (2) above was obtained. The thicknesses of the layers were set to, from the side of the resin layer (IV), 36/15/8/15/36 µm, and the blow ratio was set to 1.8. The thickness ratio R of the adhesive layer relative to the entire film was set to 0.27, and the glass transition temperature of the cyclic olefin-based resin in the adhesive layer (II) and the adhesive layer (III) was set to 138°C. For the barrier layer (I), ET3803RB, which was an ethylene-vinyl alcohol copolymer, was used. The details of the resin types and the layer structure and the evaluation results are shown in Table 2.

### Example 10

A five-layered inflation film, in which the glass transition temperature of the cyclic olefin-based resin in the adhesive layer (II) and the adhesive layer (III) of Example 1 described above was changed to 78°C, was obtained. The details of the resin types and the layer structure and the evaluation results are shown in Table 2.

### Example 11

A five-layered inflation film, in which the unmodified polyolefin-based resin (d) of Example 7 described above was changed to LLDPE2 (NC566A), was obtained. The details of the resin types and the layer structure and the evaluation results are shown in Table 2.

### Example 12

A five-layered inflation film, in which the glass transition temperature of the cyclic olefin-based resin in the adhesive layer (II) and the adhesive layer (III) of Example 11 described above was changed to 134°C, was obtained. The details of the resin types and the layer structure and the evaluation results are shown in Table 2.

### Example 13

A five-layered inflation film, in which the thicknesses of the layers of Example 9 described above were changed to, from the adhesive layer (IV) side, 47/4/8/4/47 µm and the thickness ratio R was changed to 0.07, was obtained. The details of the resin types and the layer structure and the evaluation results are shown in Table 2.

### Example 14

Using the used raw materials described above, a three-layered inflation film which was obtained by laminating in the order of barrier layer (I)/adhesive layer (III)/resin layer (V) by the co-extrusion air-cooled inflation method described in (2) above was obtained. The thicknesses of the layers were set to, from the side of the barrier layer (I), 20/20/20 µm, and the blow ratio was set to 1.4. The thickness ratio R of the adhesive layer relative to the entire film was set to 0.29, and the glass transition temperature of the cyclic olefin-based resin in the adhesive layer (III) was set to 138°C. For the barrier layer (I), 2030CA, which was a PA6/66 copolymer, was used. The details of the resin types and the layer structure and the evaluation results are shown in Table 2.

### Comparative Example 1

Using the used raw materials described above, a five-layered inflation film which was obtained by laminating in the order of resin layer (IV)/adhesive layer (II)/barrier layer (I)/adhesive layer (III)/resin layer (V) by the co-extrusion air-cooled inflation method described in (2) above was obtained. The thicknesses of the layers were set to, from the side of the resin layer (IV), 30/10/20/10/30 µm, and the blow ratio was set to 1.4. The thickness ratio R of the adhesive layer relative to the entire film was set to 0.2, and no cyclic olefin-based resin (c) was used in the adhesive layer (II) and the adhesive layer (III). For the barrier layer (I), 2030CA, which was a PA6/66 copolymer, was used. The details of the resin types and the layer structure and the evaluation results are shown in Table 3.

### Comparative Example 2

A five-layered inflation film, in which the thicknesses of the layers of Comparative Example 1 described above were changed to, from the adhesive layer (IV) side, 30/30/30/30/30 µm and the thickness ratio R was changed to 0.4, was obtained. The details of the resin types and the layer structure and the evaluation results are shown in Table 3.

### Comparative Example 3

Using the used raw materials described above, a five-layered inflation film which was obtained by laminating in the order of resin layer (IV)/adhesive layer (II)/barrier layer (I)/adhesive layer (III)/resin layer (V) by the co-extrusion air-cooled inflation method described in (2) above was obtained. The thicknesses of the layers were set to, from the side of the resin layer (IV), 47/4/8/4/47 µm, and the blow ratio was set to 1.8. The thickness ratio R of the adhesive layer relative to the entire film was set to 0.07, and no cyclic olefin-based resin (c) was used in the adhesive layer (II) and the adhesive layer (III). For the barrier layer (I), ET3803RB, which was an ethylene-vinyl alcohol copolymer, was used. The details of the resin types and the layer structure and the evaluation results are shown in Table 3.

### Comparative Example 4

Using the used raw materials described above, a five-layered inflation film which was obtained by laminating in the order of resin layer (IV)/adhesive layer (II)/barrier layer (I)/adhesive layer (III)/resin layer (V) by the co-extrusion air-cooled inflation method described in (2) above was obtained. The thicknesses of the layers were set to, from the side of the resin layer (IV), 20/20/20/20/20 µm, and the blow ratio was set to 1.4. The thickness ratio R of the adhesive layer relative to the entire film was set to 0.4, and the cyclic olefin-based resin (c) was used in the resin layer (IV) and the resin layer (V), which were not adjacent to the barrier layer (I). The concentration of the cyclic olefin-based resin (c) in the resin layer (IV) and the resin layer (V) was 29.4 wt.%. The details of the resin types and the layer structure and the evaluation results are shown in Table 3.

### Comparative Example 5

A five-layered inflation film, in which the thicknesses of the layers of Comparative Example 4 described above were changed to, from the adhesive layer (IV) side, 30/30/30/30/30 µm and the thickness ratio R was changed to 0.4, was obtained. The details of the resin types and the layer structure and the evaluation results are shown in Table 3.

### Comparative Example 6

A five-layered inflation film, in which the thicknesses of the layers of Comparative Example 4 described above were changed to, from the adhesive layer (IV) side, 30/5/30/5/30 µm and the thickness ratio R was changed to 0.1, was obtained. The details of the resin types and the layer structure and the evaluation results are shown in Table 3.

**[Table 1]**

| Layer structure | | Raw material name | Example 1 | | Example 2 | | Example 3 | | Example 4 | | Example 5 | | Example 6 | | Example 7 | |
|---|---|---|---|---|---|---|---|---|---|---|---|---|---|---|---|---|
| | | | Blending (wt%) | Thickness (µm) | Blending (wt%) | Thickness (µm) | Blending (wt%) | Thickness (µm) | Blending (wt%) | Thickness (µm) | Blend ng (wt%) | Thickness (µm) | Blending (wt%) | Thickness (µm) | Blending (wt%) | Thickness (µm) |
| Resin layer (IV) | Polyolefin-based resin (e) | NF444A | 100 | 30 | 100 | 30 | 100 | 30 | 100 | 40 | 100 | 30 | 100 | 20 | 100 | 20 |
| | | LE306 | | | | | | | | | | | | | | |
| | | UF320 | | | | | | | | | | | | | | |
| | Cyclic polyolefin-based resin (c) | 7010F | | | | | | | | | | | | | | |
| Adhesive layer (II) | Modified polyolefin-based resin (b) | Modified PE1 | 20 | 10 | 20 | 10 | 20 | 30 | 20 | 10 | 20 | 10 | 20 | 20 | 20 | 10 |
| | | Modified PE2 | | | | | | | | | | | | | | |
| | Cyclic polyolefin-based resin (c) | 8007F | | | | | | | | | | | | | | |
| | | 7010F | 39.2 | | | | 39.2 | | 39.2 | | | | | | | |
| | | 6013F | | | 39.2 | | | | | | 39.2 | | 39.2 | | 392 | |
| | | 5013F | | | | | | | | | | | | | | |
| | Unmodified polyolefin-based resin (d) | UF320 | 408 | | 40.8 | | 40.8 | | 408 | | 40.8 | | 40.8 | | 408 | |
| | | NC566A | | | | | | | | | | | | | | |
| Barrier layer (I) | Polar resin (a) | PA6/66 copolymer | 100 | 20 | 100 | 20 | 100 | 30 | 100 | 30 | 100 | 10 | 100 | 10 | 100 | 10 |
| | | EVOH | | | | | | | | | | | | | | |
| Adhesive layer (III) | Modified polyolefin-based resin (b) | Modified PE1 | 20 | 10 | 20 | 10 | 20 | 30 | 20 | 10 | 20 | 10 | 20 | 20 | 20 | 10 |
| | | Modified PE2 | | | | | | | | | | | | | | |
| | Cyclic polyolefin-based resin (c) | 8007F | | | | | | | | | | | | | | |
| | | 7010F | 39.2 | | | | 39.2 | | 39.2 | | | | | | | |
| | | 6013F | | | 39.2 | | | | | | 39.2 | | 39.2 | | 392 | |
| | | 5013F | | | | | | | | | | | | | | |
| | Unmodified polyolefin-based resin (d) | UF320 | 40.8 | | 40.8 | | 40.8 | | 408 | | 40.8 | | 40.8 | | 408 | |
| | | NC566A | | | | | | | | | | | | | | |
| Resin layer (v) | Polyolefin-based resin (e) | NF444A | 100 | 30 | 100 | 30 | 100 | 30 | 100 | 40 | 100 | 30 | 100 | 20 | 100 | 20 |
| | | LE306 | | | | | | | | | | | | | | |
| | | UF320 | | | | | | | | | | | | | | |
| | Cyclic polyolefin-based resin (c) | 7010F | | | | | | | | | | | | | | |
| Total thickness | | µm | 100 | | 100 | | 150 | | 130 | | 90 | | 90 | | 70 | |
| Thickness ratio R | | - | 0.20 | | 0.20 | | 0.40 | | 0.15 | | 0.22 | | 0.44 | | 0.29 | |
| Tg of cyclic polyolefin-based resin (c) | | °C | 110 | | 138 | | 110 | | 110 | | 138 | | 138 | | 138 | |
| Viscosity ratio R_{η} | | - | 1.1 | | 3.1 | | 1.1 | | 1.1 | | 3.1 | | 3.1 | | 3.1 | |
| Low curling properties | | | ○ | | ○ | | ○ | | ○ | | ○ | | ○ | | ○ | |
| Amount of shift L | | mm | 14 | | 13 | | 22 | | 11 | | 10 | | 17 | | 13 | |
| Elmendorf tear strength (TD) | | N/mm | 17 | | 15 | | 16 | | 22 | | 13 | | 10 | | 10 | |
| Readily linearly tearable property evaluation | | - | ⊚ | | ⊚ | | ⊚ | | ⊚ | | ⊚ | | ⊚ | | ⊚ | |

**[Table 2]**

| Layer structure | | Raw material name | Example 8 | | Example 9 | | Example 10 | | Example 11 | | Example 12 | | Example 13 | | Example 14 | |
|---|---|---|---|---|---|---|---|---|---|---|---|---|---|---|---|---|
| | | | Blending (wt%) | Thickness (µm) | Blending (wt%) | Thickness (µm) | Blending (wt%) | Thickness (µm) | Blending (wt%) | Thickness (µm) | Blending (wt%) | Thickness (µm) | Blend ing (wt%) | Thickness (µm) | Blending (wt%) | Thickness (µm) |
| Resin layer (IV) | Polyolefin-based resin (e) | NF444A | 100 | 20 | 80 | 36 | 100 | 30 | 100 | 20 | 100 | 20 | 80 | 47 | | |
| | | LE306 | | | 20 | | | | | | | | 20 | | | |
| | | UF320 | | | | | | | | | | | | | | |
| | Cyclic polyolefin-based resin (c) | 7010F | | | | | | | | | | | | | | |
| Adhesive layer (II) | Modified polyolefin-based resin (b) | Modified PE1 | 20 | 20 | 20 | 15 | 20 | 10 | 20 | 10 | 20 | 10 | 20 | 4 | | |
| | | Modified PE2 | | | | | | | | | | | | | | |
| | Cyclic polyolefin-based resin (c) | 8007F | | | | | | | | | | | | | | |
| | | 7010F | | | | | | | | | | | | | | |
| | | 6013F | 39.2 | | 39.2 | | | | 39.2 | | | | 39.2 | | | |
| | | 5013F | | | | | | | | | 39.2 | | | | | |
| | Unmodified polyolefin-based resin (d) | UF320 | 40.8 | | 40.8 | | 40.8 | | | | | | 40.8 | | | |
| | | NC566A | | | | | | | 40.8 | | 40.8 | | | | | |
| Barrier layer (I) | Polar resin (a) | PA6/66 copolymer | 100 | 20 | | | 100 | 20 | 100 | 10 | 100 | 10 | | | 100 | 20 |
| | | EVOH | | | 100 | 8 | | | | | | | 100 | 8 | | 20 |
| Adhesive layer (III) | Modified polyolefin-based resin (b) | Modified PE1 | 20 | 20 | 20 | 15 | 20 | | 20 | 10 | 20 | 10 | 20 | 4 | 20 | |
| | | Modified PE2 | | | | | | | | | | | | | | |
| | Cyclic polyolefin-based resin (c) | 8007F | | | | | | | | | | | | | | |
| | | 7010F | | | | | | | | | | | | | | |
| | | 6013F | 39.2 | | 39.2 | | | | 39.2 | | | | 39.2 | | 39.2 | |
| | | 5013F | | | | | | | | | 39.2 | | | | | |
| | Unmodified polyolefin-based resin (d) | UF320 | 40.8 | | 40.8 | | 40.8 | | | | | | 40.8 | | 40.8 | |
| | | NC566A | | | | | | | 40.8 | | 40.8 | | | | | |
| Resin layer (v) | Polyolefin-based resin (e) | NF444A | 100 | 20 | 80 | 36 | 100 | 30 | 100 | 20 | 100 | 20 | 80 | 47 | 100 | 20 |
| | | LE306 | | | 20 | | | | | | | | 20 | | | |
| | | UF320 | | | | | | | | | | | | | | |
| | Cyclic polyolefin-based resin (c) | 7010F | | | | | | | | | | | | | | |
| Total thickness | | µm | 100 | | 110 | | 100 | | 70 | | 70 | | 110 | | 60 | |
| Thickness ratio R | | - | 0.40 | | 0.27 | | 0.20 | | 0.29 | | 0.29 | | 0.07 | | 0.33 | |
| Tg of cyclic polyolefin-based resin (c) | | °C | 138 | | 138 | | 78 | | 138 | | 134 | | 138 | | 138 | |
| Viscosity ratio R_{η} | | - | 3.1 | | 3.1 | | 1.2 | | 3.1 | | 1.3 | | 3.1 | | 3.1 | |
| Low curling properties | | | ○ | | ○ | | ○ | | ○ | | ○ | | ○ | | × | |
| Amount of shift L | | mm | 16 | | 5 | | ≧25 | | ≧25 | | ≧25 | | ≧25 | | 13 | |
| Elmendorf tear strength (TD) | | N/mm | 10 | | 8 | | 22 | | 12 | | 23 | | 14 | | 17 | |
| Readily linearly tearable property evaluation | | - | ⊚ | | ⊚ | | ○ | | ○ | | ○ | | ○ | | ⊚ | |

**[Table 3]**

| Layer structure | | Raw material name | Comparative Example 1 | | Comparative Example 2 | | Comparative Example 3 | | Comparative Example 4 | | Comparative Example 5 | | Comparative Example 6 | |
|---|---|---|---|---|---|---|---|---|---|---|---|---|---|---|
| | | | Blending (wt%) | Thickness (um) | Blending (wt%) | Thickness (um) | Blending (wt%) | Thickness (µm) | Blending (Wt%) | Thickness (µm) | Blending (wt%) | Thickness (µm) | Blending (wt%) | Thickness (µm) |
| Resin layer (IV) | Polyolefin-based resin (e) | NF444A | 100 | 30 | 100 | 30 | 80 | 47 | 40 | 20 | 40 | 30 | 40 | 30 |
| | | LE306 | | | | | 20 | | | | | | | |
| | | UF320 | | | | | | | 30.6 | | 30.6 | | 30.6 | |
| | Cyclic polyolefin-based resin (c) | 7010F | | | | | | | 29.4 | | 29.4 | | 29.4 | |
| Adhesive layer (II) | Modified polyolefin-based resin (b) | Modified PE1 | 20 | 10 | 20 | 30 | | 4 | | 20 | | 30 | | 5 |
| | | Modified PE2 | | | | | 100 | | 100 | | 100 | | 100 | |
| | Cyclic polyoiefin-based resin (c) | 8007F | | | | | | | | | | | | |
| | | 7010F | | | | | | | | | | | | |
| | | 6013F | | | | | | | | | | | | |
| | | 5013F | | | | | | | | | | | | |
| | Unmodified polyolefin-based resin (d) | UF320 | 80 | | 80 | | | | | | | | | |
| | | NC566A | | | | | | | | | | | | |
| Barrier layer (I) | Polar resin (a) | PA6166 copolymer | 100 | 20 | 100 | 30 | | | 100 | 20 | 100 | 30 | 100 | 30 |
| | | EVOH | | | | | 100 | 8 | | | | | | |
| Adhesive layer (III) | Modified polyolefin-based resin (b) | Modified PE1 | 20 | 10 | 20 | 30 | | 4 | | 20 | | 30 | | 5 |
| | | Modified PE2 | | | | | 100 | | 100 | | 100 | | 100 | |
| | Cyclic polyolefin-based resin (c) | 8007F | | | | | | | | | | | | |
| | | 7010F | | | | | | | | | | | | |
| | | 6013F | | | | | | | | | | | | |
| | | 5013F | | | | | | | | | | | | |
| | Unmodified polyolefin-based resin (d) | UF320 | 80 | | 80 | | | | | | | | | |
| | | NC566A | | | | | | | | | | | | |
| Resin layer (v) | Polyolefin-based resin (e) | NF444A | 100 | 30 | 100 | 30 | 80 | 47 | 40 | 20 | 40 | 30 | 40 | 30 |
| | | LE306 | | | | | 20 | | | | | | | |
| | | UF320 | | | | | | | 30.6 | | 30.6 | | 30.6 | |
| | Cyclic polyolefin-based resin (c) | 7010F | | | | | | | 29.4 | | 29.4 | | 29.4 | |
| Total thickness | | µm | 100 | | 150 | | 110 | | 100 | | 150 | | 100 | |
| Thickness ratio R | | - | 0.20 | | 0.40 | | 0.07 | | 0.40 | | 0.40 | | 0.10 | |
| Tg of cyclic polyolefin-based resin (c) | | °C | - | | - | | - | | 110 | | 110 | | 110 | |
| Viscosity ratio R_{η} | | - | - | | - | | - | | - | | - | | - | |
| Low curling properties | | | ○ | | ○ | | ○ | | ○ | | ○ | | ○ | |
| Amount of shift L | | mm | ≧25 | | ≧25 | | ≧25 | | ≧25 | | ≧25 | | ≧25 | |
| Elmendorf tear strength (TD) | | N/mm | 41 | | 38 | | 41 | | 82 | | 94 | | 59 | |
| Readily linearly tearable property evaluation | | - | × | | × | | × | | × | | × | | × | |

### Example 15 and Comparative Example 7

Using the PA6/66 copolymer in the barrier layer (I), Example 15 of the present invention (identical to Example 5 described above) and Comparative Example 7 having adhesive layers (II) and (III) formed only from a typical adhesive resin containing no cyclic olefin-based resin are shown as a comparison.

For each, using the used raw materials described above and resin types and layer structure shown in Table 3, a five-layered inflation film which was obtained by laminating in the order of resin layer (IV)/adhesive layer (II)/barrier layer (I)/adhesive layer (III)/resin layer (V) by the co-extrusion air-cooled inflation method described in (2-1) above was obtained. The evaluation results are shown in Table 4.

### Example 16 and Comparative Example 8

Using the ethylene-vinyl alcohol resin in the barrier layer (I), Example 16 of the present invention and Comparative Example 8 (identical to Comparative Example 3 described above) having adhesive layers (II) and (III) formed only from a typical adhesive resin containing no cyclic olefin-based resin are shown as a comparison.

For each, using the used raw materials described above and resin types and layer structure shown in Table 3, a five-layered inflation film which was obtained by laminating in the order of resin layer (IV)/adhesive layer (II)/barrier layer (I)/adhesive layer (III)/resin layer (V) by the co-extrusion air-cooled inflation method described in (2-1) above was obtained. The evaluation results are shown in Table 4.

**[Table 4]**

| Layer structure | | Raw material name | Example 15 | | Comparative Example 7 | | Example 16 | | Comparative Example 8 | |
|---|---|---|---|---|---|---|---|---|---|---|
| | | | Blending (wt%) | Thickness (µm) | Blending (wt%) | Thickness (µm) | Blending (wt%) | Thickness (µm) | Blending (wt%) | Thickness (µm) |
| Resin layer (IV) | Polyolefin-based resin (e) | NF444A | 100 | 30 | 100 | 30 | 80 | 43 | 80 | 47 |
| | | LE306 | | | | | 20 | | 20 | |
| | | UF320 | | | | | | | | |
| | Cyclic polyolefin-based resin (c) | 7010F | | | | | | | | |
| Adhesive layer (II) | Modified polyolefin-based resin (b) | Modified PE1 | 20 | 10 | 20 | 10 | 20 | 8 | | 4 |
| | | Modified PE2 | | | | | | | 100 | |
| | Cyclic polyolefin-based resin (c) | 8007F | | | | | | | | |
| | | 7010F | | | | | | | | |
| | | 6013F | 39.2 | | | | 39.2 | | | |
| | | 5013F | | | | | | | | |
| | Unmodified polyolefin-based resin (d) | UF320 | 40.8 | | 80 | | 40.8 | | | |
| | | NC566A | | | | | | | | |
| Barrier layer (I) | Polar resin (a) | PA6/66 copolymer | 100 | 10 | 100 | 10 | | | | |
| | | EVOH | | | | | 100 | 8 | 100 | 8 |
| Adhesive layer (III) | Modified polyolefin-based resin (b) | Modified PE1 | 20 | 10 | 20 | 10 | 20 | 8 | | 4 |
| | | Modified PE2 | | | | | | | 100 | |
| | Cyclic polyolefin-based resin (c) | 8007F | | | | | | | | |
| | | 7010F | | | | | | | | |
| | | 6013F | 39.2 | | | | 39.2 | | | |
| | | 5013F | | | | | | | | |
| | Unmodified polyolefin-based resin (d) | UF320 | 40.8 | | 80 | | 40.8 | | | |
| | | NC566A | | | | | | | | |
| Resin layer (V) | Polyolefin-based resin (e) | NF444A | 100 | 30 | 100 | 30 | 80 | 43 | 40 | 47 |
| | | LE306 | | | | | 20 | | | |
| | | UF320 | | | | | | | 30.6 | |
| | Cyclic polyolefin-based resin (c) | 7010F | | | | | | | 29.4 | |
| Total thickness | | µm | 90 | | 90 | | 110 | | 110 | |
| Tensile elastic modulus (MD) | | MPa | 430 | | 220 | | 510 | | 380 | |
| Tensile elastic modulus (TD) | | MPa | 360 | | 230 | | 450 | | 390 | |
| Elmendorf tear strength (TD) | | N/mm | 13 | | 79 | | 8 | | 41 | |
| Degree of water vapor permeation | | g/(m²·day) | 4.5 | | 5.7 | | 2.6 | | 3.1 | |

### Evaluation

As is clear from Tables 1 to 3, the five-layered films of Comparative Examples 1 to 3 had a large amount of shift at the time of TD tearing as well as a high tear strength because no cyclic olefin-based resin was used. Furthermore, the five-layered films of Comparative Examples 4 to 6 had a large amount of shift at the time of TD tearing as well as a high tear strength because, although the cyclic olefin-based resin was used, the cyclic olefin-based resin was contained in layers that are not adjacent to the barrier layer. It is conceived that this is because, due to the certain distance between the cyclic olefin-based resin-containing layer and the barrier layer, breakage of the cyclic olefin-based resin-containing layer exhibiting the readily linearly tearable properties did not spread sufficiently to the barrier layer.

On the other hand, Examples 1 to 13 based on the present invention each had a low tear strength and excellent readily tearable properties because the adhesive layers containing the cyclic olefin-based resin and the modified polyolefin-based resin, which are the characteristics of the present invention, are used in both of the layers adjacent to the barrier layer. Based on a comparison with Comparative Examples 4 to 6 described above, it is conceived that, from the perspective of readily tearable properties, it is important to contain the cyclic olefin-based resin in the layers adjacent to the barrier layer. Furthermore, as is clear from Example 1 and Example 10, when the glass transition temperature of the cyclic olefin-based resin was 100°C or higher, and preferably 115°C or higher, excellent linearly tearable properties as well as excellent readily tearable properties are achieved. Furthermore, as is clear from Example 7, Example 11, and Example 12, by selecting the unmodified polyolefin-based resin (d) having the particular MFR region, excellent linearly tearable properties as well as excellent readily tearable properties are achieved. For these glass transition temperature of the cyclic olefin-based resin and the MFR of the unmodified polyolefin-based resin, by using a resin component having the particular region, the morphology advantageous for the readily linearly tearable properties can be formed. In addition, as is clear from Example 9 and Example 13, by setting the thickness ratio of the adhesive layers relative to the entire film to the particular ratio or greater, excellent linearly tearable properties as well as excellent readily tearable properties are achieved. This is because the breakage behavior of the cyclic olefin-based resin-containing layer exhibiting the readily linearly tearable properties indicates the critical point that controls the tearing behavior as the entire film.

Example 14 used the adhesive layer (III) at least containing the modified polyolefin-based resin and the cyclic olefin-based resin having the glass transition temperature of 115°C or higher in the layer adjacent to the barrier layer. Although the low curling properties was not sufficient because the barrier layer (I) was the surface layer, a layered body having excellent readily tearable properties and linearly tearable properties was obtained.

Based on a comparison of Example 15 and Comparative Example 7 and Example 16 and Comparative Example 8, when the layered bodies of the present invention and the layered bodies containing no cyclic olefin-based resins in the adhesive layers are compared, it is confirmed that the layered bodies of Examples of the present application each had a higher tensile elastic modulus in the MD and the TD, superior rigidity, readily tearable properties because each of Examples of the present application had a lower Elmendorf tear strength (TD), and superior water vapor barrier properties because the each of Examples of the present application had a lower water vapor permeation.

From these described above, Examples 1 to 16 based on the present invention exhibited excellent readily tearable properties as well as excellent barrier properties because the barrier layer was contained, and Examples 1 to 9 further exhibited excellent linearly tearable properties. Therefore, the present invention is suitable for readily tearable barrier film and readily tearable packaging material to which readily linearly tearable properties and easy opening are required.

## Claims

1. A readily tearable co-extruded multilayer barrier film being a multilayer film formed from at least three layers, the readily tearable co-extruded multilayer barrier film comprising
a layered body having
a barrier layer (I) containing a polar resin (a) as a main component, and
an adhesive layer (II) and an adhesive layer (III) laminated on both sides adjacent to the barrier layer (I), the adhesive layer (II) and the adhesive layer (III) each at least containing a modified polyolefin-based resin (b) modified with an unsaturated carboxylic acid or a derivative thereof, and a cyclic olefin-based resin (c).

2. The readily tearable co-extruded multilayer barrier film according to claim 1, wherein a content of the cyclic olefin-based resin (c) in each of the adhesive layer (II) and the adhesive layer (III) is from 10 wt.% to 80 wt.%.

3. The readily tearable co-extruded multilayer barrier film according to claim 1 or 2, wherein a glass transition temperature (Tg) measured in accordance with ISO 11357-3 of the cyclic olefin-based resin (c) is from 100°C to 180°C.

4. The readily tearable co-extruded multilayer barrier film according to any one of claims 1 to 3, wherein, for a viscosity η_{b} of the modified polyolefin-based resin (b) and a viscosity η_{c} of the cyclic olefin-based resin (c), a viscosity ratio R_{η} = η_{c}/η_{b} is 0.2 or greater at a measurement temperature of 230°C and a shear rate of 122/s.

5. The readily tearable co-extruded multilayer barrier film according to any one of claims 1 to 4, wherein the adhesive layer (II) and the adhesive layer (III) each contain a mixed resin of the modified polyolefin-based resin (b) modified with an unsaturated carboxylic acid or a derivative thereof, the cyclic olefin-based resin (c), and an unmodified polyolefin-based resin (d) as a main component, and a melt flow rate (MFR) of the unmodified polyolefin-based resin (d) measured in accordance with JIS K 7210 is from 0.1 to 3.5 g/10 min.

6. The readily tearable co-extruded multilayer barrier film according to claim 5, wherein the unmodified polyolefin-based resin (d) is a linear polyethylene-based resin.

7. The readily tearable co-extruded multilayer barrier film according to any one of claims 1 to 6, wherein a thickness ratio R of a total thickness t of the adhesive layer (II) and the adhesive layer (III) to a thickness T of entire film, R = (t/T), is 0.10 or greater.

8. The readily tearable co-extruded multilayer barrier film according to any one of claims 1 to 7 formed from a five-layered structure, in which a resin layer (IV) and a resin layer (V) each containing a polyolefin-based resin (e) as a main component are laminated in an order of (IV)/(II)/(I)/(III)/(V).

9. The readily tearable co-extruded multilayer barrier film according to any one of claims 1 to 8, wherein an Elmendorf tear strength of the multilayer film measured in accordance with JIS K 7128-2 is 30 N/mm or less in a transverse direction (TD) relative to a machine direction (MD).

10. The readily tearable co-extruded multilayer barrier film according to any one of claims 1 to 9, wherein the polar resin (a) is at least one type selected from the group consisting of olefin-based resins each having a polar group, polyamide-based resins, ethylene-vinyl alcohol copolymer-based resins, and polyester-based resins.

11. The readily tearable co-extruded multilayer barrier film according to any one of claims 1 to 10, wherein the barrier layer (I) is formed from two or more types of the polar resins (a) and is formed from a layered body having two or more layers.

12. A packaging material using the readily tearable co-extruded multilayer barrier film according to any one of claims 1 to 11.

## Patentansprüche

1. Leicht zerreißbare coextrudierte
Mehrschichtbarrierefolie, die eine aus mindestens drei Schichten gebildete Mehrschichtfolie ist, wobei die leicht zerreißbare coextrudierte Mehrschichtbarrierefolie umfasst:
einen Schichtkörper mit
einer Barriereschicht (I), der ein polares Harz (a) als eine Hauptkomponente enthält, und
einer Klebeschicht (II) und einer Klebeschicht (III), die auf beiden Seiten angrenzend an die Barriereschicht (I) laminiert sind, wobei die Klebeschicht (II) und die Klebeschicht (III) jeweils mindestens ein Harz auf Basis eines modifizierten Polyolefins (b), das mit einer ungesättigten Carbonsäure oder einem Derivat davon modifiziert ist, und ein Harz auf Basis eines cyclischen Olefins (c) enthält.

2. Leicht zerreißbare coextrudierte
Mehrschichtbarrierefolie gemäß Anspruch 1, wobei ein Gehalt des Harzes auf Basis eines cyclischen Olefins (c) in der Klebeschicht (II) und der Klebeschicht (III) jeweils 10 Gew.-% bis 80 Gew.-% beträgt.

3. Leicht zerreißbare coextrudierte
Mehrschichtbarrierefolie gemäß Anspruch 1 oder 2, wobei eine Glasübergangstemperatur (Tg), gemessen gemäß ISO 11357-3, des Harzes auf Basis eines cyclischen Olefins (c) 100°C bis 180°C beträgt.

4. Leicht zerreißbare coextrudierte
Mehrschichtbarrierefolie gemäß einem der Ansprüche 1 bis 3, wobei für eine Viskosität η_{b} des Harzes auf Basis eines modifizierten Polyolefins (b) und eine Viskosität η_{c} des Harzes auf Basis eines cyclischen Olefins (c) ein Viskositätsverhältnis R_{η} = η_{c}/η_{b} 0,2 oder größer bei einer Messtemperatur von 230°C und einer Schergeschwindigkeit von 122/s ist.

5. Leicht zerreißbare coextrudierte
Mehrschichtbarrierefolie gemäß einem der Ansprüche 1 bis 4, wobei die Klebeschicht (II) und die Klebeschicht (III) jeweils ein Mischharz aus dem Harz auf Basis eines modifizierten Polyolefins (b), das mit einer ungesättigten Carbonsäure oder einem Derivat davon modifiziert ist, dem Harz auf Basis eines cyclischen Olefins (c) und einem Harz auf Basis eines unmodifizierten Polyolefins (d) als eine Hauptkomponente enthält und eine Schmelzflussrate (MFR) des Harzes auf Basis eines unmodifizierten Polyolefins (d), gemessen gemäß JIS K 7210, 0,1 bis 3,5 g/10 min beträgt.

6. Leicht zerreißbare coextrudierte
Mehrschichtbarrierefolie gemäß Anspruch 5, wobei das Harz auf Basis eines unmodifizierten Polyolefins (d) ein Harz auf Basis eines linearen Polyethylens ist.

7. Leicht zerreißbare coextrudierte
Mehrschichtbarrierefolie gemäß einem der Ansprüche 1 bis 6, wobei ein Dickenverhältnis R einer Gesamtdicke t der Klebeschicht (II) und der Klebeschicht (III) zu einer Dicke T der gesamten Folie, R = (t/T), 0,10 oder größer ist.

8. Leicht zerreißbare coextrudierte
Mehrschichtbarrierefolie gemäß einem der Ansprüche 1 bis 7, die aus einer fünfschichtigen Struktur gebildet ist, in der eine Harzschicht (IV) und eine Harzschicht (V) jeweils ein Harz auf Basis eines Polyolefins (e) als eine Hauptkomponente enthalten und in einer Reihenfolge (IV)/(II)/(I)/(III)/(V) laminiert sind.

9. Leicht zerreißbare coextrudierte
Mehrschichtbarrierefolie gemäß einem der Ansprüche 1 bis 8, wobei eine Elmendorf-Reißfestigkeit der Mehrschichtfolie, gemessen gemäß JIS K 7128-2, 30 N/mm oder weniger in Querrichtung (TD) relativ zu einer Maschinerichtung (MD) beträgt.

10. Leicht zerreißbare coextrudierte
Mehrschichtbarrierefolie gemäß einem der Ansprüche 1 bis 9, wobei das polare Harz (a) mindestens ein Typ ausgewählt aus der Gruppe, bestehend aus Harzen auf Olefinbasis mit jeweils einer polaren Gruppe, Harzen auf Polyamidbasis, Harzen auf Ethylen-Vinylalkohol-Copolymer-Basis und Harzen auf Polyesterbasis, ist.

11. Leicht zerreißbare coextrudierte
Mehrschichtbarrierefolie gemäß einem der Ansprüche 1 bis 10, wobei die Barriereschicht (I) aus zwei oder mehr Typen der polaren Harze (a) gebildet ist und aus einem Schichtkörper mit zwei oder mehr Schichten gebildet ist.

12. Verpackungsmaterial, das die leicht zerreißbare coextrudierte Mehrschichtbarrierefolie gemäß einem der Ansprüche 1 bis 11 verwendet.

## Revendications

1. Film barrière multicouche co-extrudé facilement déchirable qui est un film multicouche formé à partir d'au moins trois couches, le film barrière multicouche co-extrudé facilement déchirable comprenant un corps stratifié présentant une couche barrière (I) contenant une résine polaire (a) en tant qu'un composant principal, et une couche adhésive (II) et une couche adhésive (III) stratifiées sur les deux côtés adjacents à la couche barrière (I), la couche adhésive (II) et la couche adhésive (III) contenant chacune au moins une résine à base de polyoléfine modifiée (b), modifiée avec un acide carboxylique insaturé ou un dérivé de celui-ci, et une résine à base d'oléfine cyclique (c).

2. Film barrière multicouche co-extrudé facilement déchirable selon la revendication 1, dans lequel une teneur de la résine à base d'oléfine cyclique (c) dans chacune de la couche adhésive (II) et de la couche adhésive (III) est comprise entre 10 % en poids et 80 % en poids.

3. Film barrière multicouche co-extrudé facilement déchirable selon la revendication 1 ou 2, dans lequel une température de transition vitreuse (Tg) mesurée conformément à la norme ISO 11357-3 de la résine à base d'oléfine cyclique (c) est comprise entre 100 °C et 180 °C.

4. Film barrière multicouche co-extrudé facilement déchirable selon l'une quelconque des revendications 1 à 3, dans lequel, pour une viscosité η_{b} de la résine à base de polyoléfine modifiée (b) et une viscosité η_{c} de la résine à base d'oléfine cyclique (c), un rapport de viscosité R_{η} = η_{c}/η_{b} est 0,2 ou supérieur à une température de mesure de 230 °C et un taux de cisaillement de 122/s.

5. Film barrière multicouche co-extrudé facilement déchirable selon l'une quelconque des revendications 1 à 4, dans lequel la couche adhésive (II) et la couche adhésive (III) contiennent chacune un mélange de résines composé de la résine à base de polyoléfine modifiée (b), modifiée avec un acide carboxylique insaturé ou un dérivé de celui-ci, de la résine à base d'oléfine cyclique (c), et d'une résine à base de polyoléfine non modifiée (d) en tant qu'un composant principal, et un taux d'écoulement à l'état fondu (MFR) de la résine à base de polyoléfine non modifiée (d) mesuré conformément à la norme JIS K 7210 est compris entre 0,1 g/10 min et 3,5 g/10 min.

6. Film barrière multicouche co-extrudé facilement déchirable selon la revendication 5, dans lequel la résine à base de polyoléfine non modifiée (d) est une résine à base de polyéthylène linéaire.

7. Film barrière multicouche co-extrudé facilement déchirable selon l'une quelconque des revendications 1 à 6, dans lequel un rapport d'épaisseur R d'une épaisseur totale t de la couche adhésive (II) et de la couche adhésive (III) à une épaisseur T du film entier, R = (t/T), est 0,10 ou supérieur.

8. Film barrière multicouche co-extrudé facilement déchirable selon l'une quelconque des revendications 1 à 7 formé à partir d'une structure à cinq couches, dans lequel une couche de résine (IV) et une couche de résine (V) contenant chacune une résine à base de polyoléfine (e) en tant qu'un composant principal sont stratifiées dans un ordre de (IV)/(II)/(I)/(III)/(V).

9. Film barrière multicouche co-extrudé facilement déchirable selon l'une quelconque des revendications 1 à 8, dans lequel une résistance à la déchirure Elmendorf du film multicouche mesurée conformément à la norme JIS K 7128-2 est 30 N/mm ou moins dans une direction transversale (TD) par rapport à une direction machine (MD).

10. Film barrière multicouche co-extrudé facilement déchirable selon l'une quelconque des revendications 1 à 9, dans lequel la résine polaire (a) est au moins un type sélectionné parmi le groupe consistant en des résines à base d'oléfine présentant chacune un groupe polaire, des résines à base de polyamide, des résines à base de copolymère d'éthylènealcool vinylique, et des résines à base de polyester.

11. Film barrière multicouche co-extrudé facilement déchirable selon l'une quelconque des revendications 1 à 10, dans lequel la couche barrière (1) est formée à partir de deux types ou plus des résines polaires (a) et est formée à partir d'un corps stratifié présentant deux couches ou plus.

12. Matériau d'emballage utilisant le film barrière multicouche co-extrudé facilement déchirable selon l'une quelconque des revendications 1 à 11.
